# EUROPEAN PATENT APPLICATION

(11) **EP 4 517 996 A1**
(43) Date of publication of application: **05.03.2025**
(21) Application number: 22950487.3
(22) Date of filing: 11.07.2022
(51) Int. Cl.: H01M 50/446

(54) **SEPARATOR AND PREPARATION METHOD THEREFOR, SECONDARY BATTERY, BATTERY MODULE, BATTERY PACK AND ELECTRIC DEVICE**

(71) Applicant: Contemporary Amperex Technology (Hong Kong) Limited, Hong Kong (HK)
(72) Inventor: HONG, Haiyi, Ningde City, Fujian 352100 (CN); YANG, Jianrui, Ningde City, Fujian 352100 (CN); KANG, Haiyang, Ningde City, Fujian 352100 (CN); SUN, Chengdong, Ningde City, Fujian 352100 (CN); ZHENG, Yi, Ningde City, Fujian 352100 (CN); CHAO, Lei, Ningde City, Fujian 352100 (CN)
(74) Representative: Gong, Jinping
(86) International application number: PCT/CN2022/104916
(87) International publication number: WO 2024/011356

(57) **Abstract**

This application provides a separator, a preparation method thereof, and a secondary battery, a battery module, a battery pack, and an electric apparatus containing such separator. The separator includes: a substrate and a coating applied on at least one surface of the substrate, where the coating includes 40wt% to 90wt% first organic particles, 2wt% to 15wt% pressure-sensitive binder, and optionally 0wt% to 50wt% second organic particles. The first organic particles include an organic polymer and an inorganic substance. The pressure-sensitive binder includes an organic polymer and a plasticizer. The separator provided in this application has good ionic conductivity and adhesion performance at room temperature, is not adhered under a pressure of 1 MPa or below, and is significantly adhered under a pressure of 2 MPa or above, which can significantly improve structural stability and ionic conductivity of an electrochemical device while satisfying requirements for yield rate of production and kinetic performance of a battery cell.

## Description

### TECHNICAL FIELD

This application relates to the field of battery technologies, and in particular, to a separator, a preparation method thereof, and a secondary battery, a battery module, a battery pack, and an electric apparatus containing such separator.

### BACKGROUND

In a battery cell manufacturing process of electrochemical devices, an electrode plate and a separator are inevitably misaligned during transfer. In mild cases, the electrode plate wrinkles after full charging, which seriously affects kinetic performance and degrades safety performance of the battery cell; or in severe cases, electrode plates may come into contact with each other, leading to scrapping of the dry cell. Therefore, technicians apply an adhesion coating on the separator, and usually perform pre-pressing with a proper force in the first recombination process of the electrode plate and separator of the electrochemical device, to ensure a certain level of adhesion between the electrode plate and separator of the electrochemical device before the next process. However, due to the requirement of production efficiency, the pressure and its acting duration in the first process cannot achieve adequate adhesion between the electrode plate and separator of the electrochemical device. In addition, during transportation of separators, proper adhesion between the separators is also required. If an adhesion force is excessively large, the separators may be adhered together, which is not conducive to subsequent rapid recombination of the electrode plate and the separator. Therefore, it is a challenging problem that technicians urgently need to resolve: how to achieve proper adhesion between the separator and the electrode plate to improve safety performance while preventing excessive adhesion force between the separators during transportation from affecting subsequent use of the separators.

**In** addition to the foregoing challenge, the following problems also need to be considered: whether an excessively high surface density of the adhesion substance worsens the resistance of the separator, whether the adhesion forces of the adhesion substance at high temperature and room temperature are proper, and whether the pores of the separator are blocked such that the resistance of the separator is increased and the kinetic performance of the battery cell is affected.

**In** view of this, it is of great significance to develop a separator capable of resolving all the foregoing problems.

### SUMMARY

This application has been made in view of the foregoing issues, with an objective to provide a separator, a preparation method thereof, and a secondary battery, a battery module, a battery pack, and an electric apparatus containing such separator.

To achieve the foregoing objective, a first aspect of this application provides a separator including:
a substrate; and
a coating applied on at least one surface of the substrate, where the coating includes 40wt% to 90wt% first organic particles, 2wt% to 15wt% pressure-sensitive binder, and optionally, 0wt% to 50wt% second organic particles;
where the first organic particles include an organic polymer and an inorganic substance, and the pressure-sensitive binder includes an organic polymer and a plasticizer;
optionally, a median particle size by volume of the first organic particles satisfies (Dᵥ90-Dᵥ10)/Dᵥ50≤2.5, optionally (Dᵥ90-Dᵥ10)/Dᵥ50≤2, and more optionally (Dᵥ90-Dᵥ10)/Dᵥ50≤1.8, and glass transition temperature of the first organic particles is 20°C to 100°C, optionally 30°C to 80°C; and
optionally, the separator satisfies 0.1 gm⁻²Ω⁻¹≤ρ/R≤1.0 gm⁻²Ω⁻¹, optionally 0.5 gm⁻²Ω⁻¹≤ρ/R≤0.9 gm⁻²Ω⁻¹, and more optionally 0.6 gm⁻²Ω⁻¹≤ρ/R≤0.8 gm⁻²Ω⁻¹, where ρ represents surface density of the coating on the substrate, and R represents resistance of the separator at 25°C.

The separator includes a pressure-sensitive binder that has a good pressure-sensitive feature and whose adhesion force is below 0.08 N/m under 1 MPa or below, so that adhesion between separators can be avoided during winding and storage processes of the separators. In addition, at room temperature (usually 20°C-30°C, for example, 25°C) under pressure of 2 MPa or above, the separator can be significantly adhered to the electrode plate. Therefore, the electrode plate and the separator can be closely attached at room temperature under proper pressure when the battery cell is prepared by using the separator. In addition, optionally, the separator satisfies 0.1 gm⁻²Ω⁻¹≤ρ/R≤1.0 gm⁻²Ω⁻¹, so that the separator has excellent adhesion performance without increasing the resistance of the separator or hereby deteriorating kinetic performance.

In any embodiment, optionally, the first organic particles satisfy one or more of the following conditions:
(1) a median particle size by volume Dᵥ50 of the first organic particles is 3 µm to 36 µm, optionally 5 µm to 20 µm;
(2) the glass transition temperature of the first organic particles is 20°C to 100°C, optionally 30°C to 80°C; and
(3) a weight-average molecular weight of the organic polymer in the first organic particles is 500×10³ g/mol to 1000×10³ g/mol, optionally 800×10³ g/mol to 1000×10³ g/mol.

In any embodiment, optionally, the organic polymer in the first organic particles is formed by polymerizing at least the following monomers:
a first polymer monomer, where the first polymer monomer has at least one ester bond and is optionally one or more of methacrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroethyl methacrylate, glycidyl methacrylate, or trimethylolpropane triacrylate, and more optionally is one or more of methyl methacrylate, lauryl acrylate, lauryl methacrylate, or trimethylolpropane triacrylate;
a second polymer monomer, where the second polymer monomer has at least one cyanide bond and is optionally one or more of acrylonitrile, methacrylonitrile, and ethacrylonitrile, and more optionally is one or more of acrylonitrile and methacrylonitrile; and
a third polymer monomer, where the third polymer monomer has at least one amide bond and is optionally one or more of acrylamide, N-methylol acrylamide, and N-butoxy methacrylamide, and more optionally is one or more of acrylamide and N-methylol acrylamide; where
optionally, a weight ratio of the first polymer monomer, the second polymer monomer, and the third polymer monomer is 1:0-0.8:0.05-0.75, optionally 1:0.1-0.6:0.1-0.6.

When the organic polymer is formed by polymerizing the foregoing polymer monomers, the prepared first organic particles have good adhesion performance and also have relatively low glass transition temperature. In addition, density ρ of a surface of the separator on which the adhesion substance is sprayed and the resistance R of the separator satisfy 0.1 gm⁻²Ω⁻¹≤ρ/R≤1.0 gm⁻²Ω⁻¹, which helps reduce the resistance of the separator and improve the kinetic performance of the battery using the separator.

In any embodiment, optionally, a percentage of the organic polymer in the first organic particles is 50% to 99.9%, optionally 60% to 99%, and more optionally 70% to 99% based on a total dry weight of the first organic particles; and
a percentage of the inorganic substance in the first organic particles is 0.1% to 50%, optionally 1% to 40%, and more optionally 1% to 30% based on the total dry weight of the first organic particles.

In any embodiment, optionally, a weight ratio of the organic polymer to the inorganic substance in the first organic particles is 99:1 to 1:1, optionally 70:30 to 1:1.

In any embodiment, optionally, based on a total weight of the organic polymer in the first organic particles,
a percentage of the first polymer monomer is 35wt% to 80wt%, optionally 45wt% to 70wt%;
a percentage of the second polymer monomer is 0wt% to 30wt%, optionally 5wt% to 25wt%; and
a percentage of the third polymer monomer is 5wt% to 40wt%, optionally 8wt% to 35wt%.

In any embodiment, optionally, the inorganic substance in the first organic particles is selected from one or more of an oxide of silicon, aluminum, calcium, zinc, and magnesium, and sodium sulfate, sodium benzoate, calcium carbonate, and a modified material thereof, optionally is one or more of silicon oxide, silica sol, aluminum oxide, zinc oxide, magnesium oxide, and sodium benzoate, and more optionally is one or more of gas-phased silicon dioxide, silicon micropowder, aluminum oxide, and sodium benzoate.

In any embodiment, optionally, surfaces of the first organic particles are uneven, and inorganic oxide clusters with a particle size of 10 nm to 200 nm are evenly distributed on the surfaces.

In any embodiment, optionally, a weight ratio of the organic polymer to the plasticizer included in the pressure-sensitive binder is (4-25): 1, optionally (4-11): 1.

Relative percentages of the organic polymer and the plasticizer included in the pressure-sensitive binder is within the foregoing range, which ensures a greater adhesion force between the electrode plate and the separator and improves the adhesion performance and cycling performance, without significantly increasing the resistance of the separator.

In any embodiment, optionally, the pressure-sensitive binder has a core-shell structure, and both core and shell of the core-shell structure include the organic polymer and the plasticizer, where in the core, a weight ratio of the organic polymer to the plasticizer is (3-4):1, optionally (3.2-3.8):1, and in the shell structure, a weight ratio of the organic polymer to the plasticizer is (7-9): 1, optionally (7.5-8.5):1.

A core and a shell of the core-shell structure both mainly include the organic polymer and the plasticizer, which can further improve pressure-sensitive performance of the pressure-sensitive binder, thereby improving applicability of the separator to different pressure conditions, helping reduce the resistance of the separator, and improving the kinetic performance of the separator.

In any embodiment, optionally, in the pressure-sensitive binder, a part of the plasticizer is grafted onto the organic polymer; and optionally, in the pressure-sensitive binder, based on a weight of the plasticizer, at least 5wt% plasticizer is grafted onto the organic polymer.

When a part of the plasticizer is grafted on the organic polymer, the plasticizer can be prevented from migrating into the electrolyte in a large amount during cycling, thereby avoiding consumption of various functional additives of the electrolyte, which otherwise increases the resistance of the separator and affects the kinetic performance of the battery cell.

In any embodiment, optionally, a median particle size by volume Dᵥ50 of the pressure-sensitive binder is 0.3 µm to 3.5 µm, optionally 0.8 µm to 2.0 µm.

With a proper particle size, the pressure-sensitive binder is more uniformly distributed on the first organic particles or both the first organic particles and the second organic particles, adhesion between the core and shell of the pressure-sensitive binder and the electrode plate can be better exerted under specific pressure, and the kinetic performance of the separator is effectively improved.

In any embodiment, optionally, glass transition temperature of the pressure-sensitive binder is -50°C to 100°C, optionally -45°C to 60°C.

When the glass transition temperature of the pressure-sensitive binder is within the foregoing range, the adhesion force at room temperature is better ensured, thereby avoiding difficult winding and unwinding of the separators due to adhesion of the separators during a storage process that is caused by the adhesion force greater than 0.08 N/m under 1 MPa and also avoiding weak adhesion between the separator and the electrode plate caused by the adhesion force less than 0.1 N/m at room temperature under 2 MPa, which otherwise is not conducive to shaping of the battery cell.

In any embodiment, optionally, in the pressure-sensitive binder, the organic polymer includes a copolymer formed by copolymerization of a mixture of at least one of the following first monomer group, at least one of the following second monomer group, at least one of the following third monomer group, and at least one of the following reactive dispersants:
a first monomer group, including acrylic acid, methacrylic acid, methyl methacrylate, tert-butyl methacrylate, isobornyl methacrylate, methylol acrylamide, acrylamide, styrene, and acrylonitrile;
a second monomer group, including C₄-C₂₂ alkyl acrylate such as isobutyl acrylate, isooctyl acrylate, tert-butyl acrylate, 2-ethylhexyl acrylate (isooctyl acrylate), cyclohexyl acrylate, ethyl methacrylate, isobutyl methacrylate, 2-ethylhexyl methacrylate, n-hexyl methacrylate, cyclohexyl methacrylate, and benzyl methacrylate, 2-hydroxyethyl acrylate, 2-hydroxypropyl methacrylate, ethyleneurea ethyl methacrylate, dicyclopentenyl ethoxy methacrylate, tetrahydrofuryl methacrylate, trifluoroethyl methacrylate, dimethylaminoethyl methacrylate, diethylaminoethyl methacrylate, propylene methacrylate, and dicyclopentenyl ethoxy methacrylate;
a third monomer group, including 2-hydroxyethyl methacrylate, 2-hydroxypropyl methacrylate, glycidyl acrylate, glycidyl methacrylate, dimethylaminoethyl methacrylate, diethylaminoethyl methacrylate, vinyltrimethoxysilane, vinyltriethoxysilane, vinyltriisopropoxysilane, γ-methacryloxypropyltrimethoxysilane, N-methylol acrylamide, N-butoxymethacrylamide, diacetone acrylamide (DAAM), acetoacetate ethyl methacrylate (AAEM), divinylbenzene, epoxy resin with an epoxy value of 0.35 to 0.50, and divinylbenzene; and
reactive dispersants, including polyvinyl alcohol, polypropylene alcohol, polypropylene glycol, polyethylene glycol, and polyvinyl acid alcohol.

In any embodiment, optionally, an alcoholysis degree of the reactive dispersant is greater than or equal to 85%, and the number-average degree of polymerization is 400 to 2000; or preferably, the alcoholysis degree is greater than or equal to 88%, and the number-average degree of polymerization is 500 to 1600.

In any embodiment, optionally, the plasticizer is selected from one or more of the following: C₄-C₁₀ alkyl glycerol diether or monoether, C₄-C₁₀ carboxylic acid glycerol monoester or diester, and C₄-C₁₀ alkyl propylene glycol monoether or glycerin.

In any embodiment, optionally, average thickness of the coating is 0.8 µm to 22 µm, optionally 2 µm to 15 µm.

In any embodiment, optionally, the second organic particles are a polymer of one or more monomers including the following groups: halogen, a phenyl group, an epoxy group, a cyano group, an ester group, and an amide group; and
optionally, the second organic particles are selected from at least one of the following: a homopolymer or copolymer containing fluorine-containing alkenyl monomer units, a homopolymer or copolymer of alkylene monomer units, a homopolymer or copolymer of unsaturated nitrile monomer units, a homopolymer or copolymer of alkylene oxide monomer units, a dimer, homopolymer, or copolymer of monosaccharide monomer units, and modified compounds of the preceding homopolymers or copolymers.

In any embodiment, optionally, the fluoroalkenyl monomer unit is selected from one or more of difluoroethylene, vinylidene fluoride, trifluoroethylene, chlorotrifluoroethylene, tetrafluoroethylene, hexafluoropropylene, or a derivative thereof.

In any embodiment, optionally, the alkenyl monomer unit is selected from one or more of ethylene, propylene, butadiene, isoprene, styrene, or a derivative thereof.

In any embodiment, optionally, the unsaturated nitrile monomer unit is selected from one or more of acrylonitrile, methyl acrylonitrile, or a derivative thereof.

In any embodiment, optionally, the epoxidate monomer unit is selected from one or more of ethylene oxide, propylene oxide, or a derivative thereof.

In any embodiment, optionally, the monosaccharide monomer unit is selected from glucose or a derivative thereof.

In any embodiment, optionally, the second organic particles are selected from at least one of the following: polyvinylfluoride, polyvinylidene fluoride, polyvinylidene fluoride-co-hexafluoropropylene, polyvinylidene fluoride-co-trichloroethylene, polystyrene-co-methyl methacrylate, polystyrene-co-butyl acrylate, styrene-butyl acrylate-isooctyl acrylate, polymethyl methacrylate, polyacrylonitrile, polyvinyl acetate, polyethylene-co-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, and cyanoethyl sucrose.

In any embodiment, optionally, the second organic particles are selected from at least one of the following: polyvinylidene fluoride-co-hexafluoropropylene, polystyrene-co-butyl acrylate, styrene-butyl acrylate-isooctyl acrylate, polyvinylfluoride, polyvinylidene fluoride, and polyvinylidene fluoride-co-trichloroethylene.

In any embodiment, optionally, the second organic particles satisfy one or more of the following conditions:
(1) a median particle size by volume Dᵥ50 of the second organic particles is 2 µm to 20 µm, optionally 6 µm to 15 µm;
(2) a melting point of the second organic particles is 130°C to 160°C, optionally 138°C to 150°C; and
(3) a weight-average molecular weight of the second organic particles is 400×10³ g/mol to 1000×10³ g/mol, optionally 450×10³ g/mol to 650×10³ g/mol.

When the melting point of the second organic particles is within the foregoing range, the second organic particles can withstand swelling of the electrolyte. On the one hand, no excessive electrolyte is consumed, and a residual monomer is not easy to be precipitated in the electrolyte and block the separator, which otherwise increases the resistance of the separator and further affects the kinetic performance of the battery cell. On the other hand, adhesion between the separator and the electrode plate is not greatly reduced, and the electrode plate is not easily damaged by the second organic particles, which otherwise decreases the safety performance.

In any embodiment, optionally, the separator satisfies one or more of the following conditions:
(1) porosity of the substrate is 10% to 95%;
(2) a pore diameter of the substrate is 20 nm to 60 nm;
(3) thickness of the substrate is 3 µm to 12 µm, optionally 5 µm to 9 µm; and
(4) the substrate is a film or non-woven fabric selected from one or more of the following:
polyethylene, polypropylene, polyethylene terephthalate, polybutylene terephthalate, polyester, polyacetal, polyamide, polycarbonate, polyimide, polyether-ether-ketone, polyaryletherketone, polyetherimide, polyamide-imide, polybenzimidazole, polyethersulfone, polyphenylene oxide, a cycloolefin copolymer, polyphenylene sulfide, and polyvinyl naphthaline.

When the separator satisfies one or more of the foregoing conditions, the adhesion performance of the separator and the kinetic performance and the cycling performance of the corresponding secondary battery are further improved.

In any embodiment, optionally, in the separator, a weight ratio of the first organic particles to the second organic particles is 10-100:0-90, optionally 20-90:0-60; and
optionally, a ratio of a total weight of the first organic particles and the second organic particles to a weight of the pressure-sensitive binder is 20-92:8-20, optionally 60-90:10-15.

A second aspect of this application provides a preparation method of the separator in first aspect of this application, including the following steps:
(S1) adding first organic particles and a dispersant to a solvent to form a first polymer solution;
(S2) adding a pressure-sensitive binder to the first polymer solution obtained in step S1, and mixing a resulting mixture fully to form a second polymer solution;
(S3) optionally, adding second organic particles to the second polymer solution obtained in step S2, and mixing a resulting mixture fully to form a third polymer solution; and
(S4) applying the second polymer solution obtained in step S2 or the third polymer solution obtained in step S3 onto at least one surface of a substrate, and drying the at least one surface to obtain the separator;
where the separator includes the substrate and a coating applied on at least one surface of the substrate, and the coating includes 40wt% to 90wt% first organic particles, 2wt% to 15wt% pressure-sensitive binder, and optional 0wt% to 50wt% second organic particles; where the first organic particles include an organic polymer and an inorganic substance, and the pressure-sensitive binder includes an organic polymer and a plasticizer; optionally, a median particle size by volume of the first organic particles satisfies (Dᵥ90-Dᵥ10)/Dᵥ50≤2.5, optionally (Dᵥ90-Dᵥ10)/Dᵥ50≤2, and more optionally (Dᵥ90-Dᵥ10)/Dᵥ50≤1.8, and glass transition temperature of the first organic particles is 20°C to 100°C, optionally 30°C to 80°C; and optionally, the separator satisfies 0.1 gm⁻²Ω⁻¹≤ρ/R≤1.0 gm⁻²Ω⁻¹, optionally 0.5 gm⁻²Ω⁻¹≤ρ/R≤0.9 gm⁻²Ω⁻¹, and more optionally 0.6 gm⁻²Ω⁻¹≤ρ/R≤0.8 gm⁻²Ω⁻¹, where ρ represents surface density of the coating on the substrate, and R represents resistance of the separator at 25°C.

A third aspect of this application provides a secondary battery, including a positive electrode plate, a negative electrode plate, a separator sandwiched between the positive electrode plate and the negative electrode plate, and an electrolyte, where the separator is the separator in the first aspect of this application or the separator prepared in the method in the second aspect of this application.

In any embodiment, optionally, an adhesion force between the positive electrode plate and separator of the secondary battery satisfies 1.2≤F2/F1≤4, optionally 1.5≤F2/F1≤3.8, where F1 represents an adhesion force between the positive electrode plate and the separator at 25°C under 2 MPa or above, and F2 represents an adhesion force between the positive electrode plate and the separator at 95°C under 2 MPa or above.

A fourth aspect of this application provides a battery module, including the secondary battery according to the third aspect of this application. The battery module can be prepared in a method commonly used in the art.

A fifth aspect of this application provides a battery pack, including at least one of the secondary battery in the third aspect of this application or the battery pack in the fourth aspect of this application. The battery pack can be prepared in a method commonly used in the art.

A sixth aspect of this application provides an electric apparatus including at least one of the secondary battery according to the third aspect of this application, the battery module according to the fourth aspect of this application, or the battery pack according to the fifth aspect of this application. The electric apparatus can be prepared in a method commonly used in the art.

### Beneficial effects

The separator provided in this application includes the substrate and the coating applied on at least one surface of the substrate, where the coating includes 40wt% to 90wt% first organic particles, 2wt% to 15wt% pressure-sensitive binder polymer, and optional 0wt% to 50wt% second organic particles. The pressure-sensitive binder includes the organic polymer and the plasticizer, and the organic polymer and the plasticizer cooperate to ensure that the pressure-sensitive binder has a good pressure-sensitive feature, so that the coating has a good pressure-sensitive feature and the separator also has a good pressure-sensitive feature. In particular, the separator is only slightly adhered to the electrode plate at room temperature (usually 20°C-30°C, for example, 25°C) under pressure of 1 MPa or below, and the separator can be significantly adhered to the electrode plate at room temperature under pressure of 2 MPa or above. Especially at 95°C under the pressure of 2 MPa or above, the adhesion between the separator and the electrode plate is significantly improved. On the one hand, the electrode plate of the electrochemical device can closely fit the separator at room temperature, to avoid misalignment of the electrode plate of the electrochemical device and the separator during the production and transfer processes and effectively prevent the negative electrode wrinkling caused by insufficient adhesion between the separator and the electrode plate, which further ensures structural stability of the electrochemical device and facilitates an increase in a yield rate during housing, thereby improving shaping performance and safety performance of the battery cell and reducing production costs. On the other hand, the separator provided in this application is not excessively bonded during winding and storage processes, thereby facilitating subsequent use during preparation of the battery cell. In addition, optionally, a median particle size by volume of the first organic particles satisfies (Dᵥ90-Dᵥ10)/Dᵥ50≤2.5, and glass transition temperature is 20°C to 100°C, which facilitates improvement of application of the adhesion coating and avoids blocking of the pore of the separator, thereby avoiding increasing the internal resistance of the separator. Finally, optionally, the separator in this application satisfies 0.1 gm⁻²Ω⁻¹≤ρ/R≤1.0 gm⁻²Ω⁻¹, which helps ensure proper surface density of a coating of the separator and further avoids the excessively large resistance of the separator, thereby satisfying requirements for yield rate of production and kinetic performance of a battery cell.

The battery module, the battery pack, and the electric apparatus in this application include the separator according to the first aspect of this application or the secondary battery according to the second aspect of this application, and therefore, have at least the same advantages as the separator or the secondary battery in this application.

### BRIEF DESCRIPTION OF DRAWINGS

To describe the technical solutions in the examples of this application more clearly, the following briefly describes the accompanying drawings required for describing the examples of this application. Apparently, the accompanying drawings in the following descriptions show merely some examples of this application, and a person of ordinary skill in the art may still derive other drawings from the accompanying drawings without creative efforts.
FIG. 1 is a schematic diagram of a secondary battery according to an embodiment of this application.
FIG. 2 is a schematic diagram of a battery module according to an embodiment of this application.
FIG. 3 is a schematic diagram of a battery pack according to an embodiment of this application.
FIG. 4 is a schematic exploded view of FIG. 3.
FIG. 5 is a schematic diagram of an electric apparatus according to an embodiment of this application.
FIG. 6 shows topography images of a pressure-sensitive coating of a separator prepared according to an embodiment of this application, where FIG. 6-a, FIG. 6-b, and FIG. 6-c are scanning electron micrographs of different magnifications.

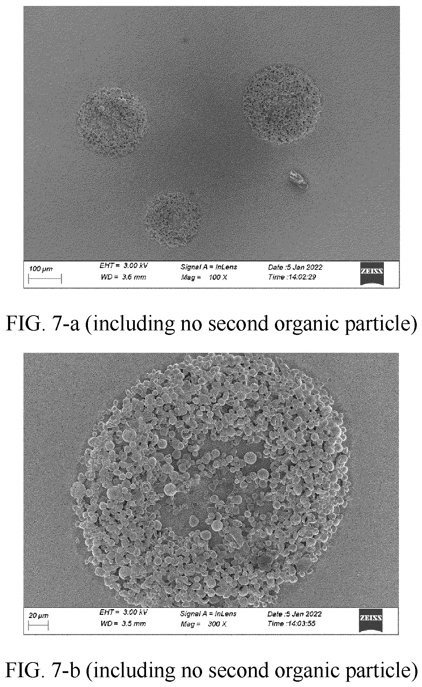

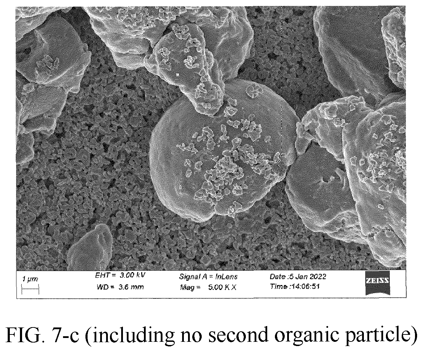

FIG. 7 shows topography images of a pressure-sensitive coating of a separator prepared according to an embodiment of this application, where FIG. 7-a, FIG. 7-b, and FIG. 7-c are scanning electron micrographs of different magnifications.

Reference signs are as follows:
1. battery pack; 2. upper box body; 3. lower box body; 4. battery module; and 5. secondary battery.

### DESCRIPTION OF EMBODIMENTS

The following specifically discloses embodiments of a separator, a preparation method thereof, a secondary battery, a battery module, a battery pack, and an electric apparatus in this application with appropriate reference to detailed descriptions of accompanying drawings. However, there may be cases where unnecessary detailed descriptions are omitted. For example, detailed descriptions of a well-known matter and repeated descriptions of actually identical structures have been omitted. This is to avoid unnecessarily prolonging the following descriptions, for ease of understanding by a person skilled in the art. In addition, the accompanying drawings and the following descriptions are provided for a person skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, such as, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In the descriptions of this specification, it should be noted that "more than" or "less than" is inclusive of the present number and that "more" in "one or more" means two or more than two, unless otherwise specified.

It should be noted that, in this application, a term "average degree of polymerization" means that a polymer includes homologous polymer molecules with different degrees of polymerization that have statistical average significance. There are two commonest methods for expressing the average degree of polymerization: a degree of polymerization obtained by averaging numbers of molecules is referred to as a number-average degree of polymerization; and a degree of polymerization obtained by averaging weight is referred to as a weight-average degree of polymerization. The "average degree of polymerization" in this application is the number-average degree of polymerization.

It should be noted that, in this application, the term "alcoholysis degree" refers to a ratio of hydroxyl groups in a product obtained after alcoholysis to original groups, which is measured in a unit of mole fraction (%). For example, if there are 100 original groups (ester groups) and 60 hydroxyl groups after alcoholysis, an alcoholysis degree is 60%.

It should be noted that, in this application, terms "primary particle" and "secondary particle" have meanings commonly used in the art. Specifically, the "primary particle" is a non-agglomerated particle, and the "secondary particle" is an agglomerated particle formed through aggregation of two or more primary particles. The primary particles and the secondary particles can be easily distinguished via a scanning electron microscope (SEM) image.

Due to advantages such as high energy density, portability, no memory effect, and environmental friendliness, the secondary battery has become a preferred power supply for an electric apparatus. A separator in the secondary battery is an important part for ensuring the safety performance of the battery. However, in an aspect, in a battery cell manufacturing process of an electrochemical device, an electrode plate and a separator are inevitably misaligned during production and transfer. In mild cases, the electrode plate wrinkles after full charging, which seriously affects kinetic performance and degrades safety performance of the battery cell; in severe cases, electrode plates may come into contact with each other, leading to scrapping of the dry cell. Therefore, technicians apply an adhesion coating on the separator, and usually perform pre-pressing with a proper force in the first recombination process of the electrode plate and separator of the electrochemical device, to ensure a certain level of adhesion between the electrode plate and separator of the electrochemical device before the next process. However, due to the requirement of production efficiency, in consideration that higher pressure deteriorates a material structure, the pressure and its acting duration in the first process usually cannot achieve adequate adhesion between electrode plate and separator of the electrochemical device. In addition, in order to ensure a margin of the battery cell group and a yield rate during housing, it is usually necessary to bake the electrode plate and separator of the electrochemical device in a tunnel furnace at 80°C to 100°C for 700s or longer time, and then pressure is applied, so that the electrode plate and separator of the electrochemical device are closely attached. Therefore, if an adhesion force between the separator and the electrode plate at room temperature (25°C) does not match well with an adhesion force at high temperature (for example, 95°C), insufficient adhesion or excessive adhesion force may be caused for the battery cell, which in turn causes a significant increase in resistance of the separator, thereby deteriorating kinetic performance of the battery cell and even causing a safety hazard.

In addition, during transportation of separators, proper adhesion between the separators is also required. If an adhesion force is excessively large, the separators may be adhered together, which is not conducive to subsequent rapid recombination of the electrode plate and the separator. In addition, during research, the inventors have found that an improper adhesion substance and improper surface density of the adhesion substance may block the pores of the separator, which decreases the yield rate of the battery cell and the kinetic performance of the battery cell.

In order to resolve the foregoing problems, after massive research, the inventors have found that low viscosity at low pressure and high viscosity at high pressure can be better achieved by applying a pressure-sensitive binder coating on the substrate of the separator, and coating density of the pressure-sensitive coating and the resistance of the separator are further adjusted to satisfy 0.1 gm⁻²Ω⁻¹≤ρ/R≤1.0 gm⁻²Ω⁻¹, so that the resistance of the separator can be further reduced and kinetic performance of the secondary battery using the separator is improved.

### Separator

A first aspect of this application provides a separator, including:
a substrate; and
a coating applied on at least one surface of the substrate, where the coating includes 40wt% to 90wt% first organic particles, 2wt% to 15wt% pressure-sensitive binder, and optional 0wt% to 50wt% second organic particles;
where the first organic particles include an organic polymer and an inorganic substance, and the pressure-sensitive binder includes an organic polymer and a plasticizer;
optionally, a median particle size by volume of the first organic particles satisfies (Dᵥ90-Dᵥ10)/Dᵥ50≤2.5, optionally (Dᵥ90-Dᵥ10)/Dᵥ50≤2, and more optionally (Dᵥ90-Dᵥ10)/Dv50≤1.8, and glass transition temperature of the first organic particles is 20°C to 100°C, optionally 30°C to 80°C; and
optionally, the separator satisfies 0.1 gm⁻²Ω⁻¹≤ρ/R≤1.0 gm⁻²Ω⁻¹, optionally 0.5 gm⁻²Ω⁻¹≤ρ/R≤0.9 gm⁻²Ω⁻¹, and more optionally 0.6 gm⁻²Ω⁻¹≤ρ/R≤0.8 gm⁻²Ω⁻¹, where ρ represents surface density of the coating on the substrate, and R represents resistance of the separator at 25°C.

A coating including 40wt% to 90wt% first organic particles, 2wt% to 15wt% pressure-sensitive binder, and optional 0wt% to 50wt% second organic particles is applied on at least one surface of the substrate of the porous separator in this application. The pressure-sensitive binder includes a binder polymer and a plasticizer, and the binder polymer and the plasticizer cooperate to ensure that the pressure-sensitive binder polymer has a good pressure-sensitive feature, so that the coating has a good pressure-sensitive feature and the separator also has a good pressure-sensitive feature. In particular, the separator is only slightly adhered to the electrode plate under pressure of 1 MPa or below, and can be significantly adhered to the electrode plate under pressure of 2 MPa or above. Especially at 95°C under the pressure of 2 MPa or above, the adhesion between the separator and the electrode plate is significantly improved. On the one hand, the electrode plate of the electrochemical device can closely fit the separator at room temperature, to avoid misalignment of the electrode plate of the electrochemical device and the separator during the production and transfer processes and effectively prevent the negative electrode wrinkling caused by insufficient adhesion between the separator and the electrode plate, which further ensures structural stability of the electrochemical device and facilitates an increase in a yield rate during housing, thereby improving shaping performance and safety performance of the battery cell and reducing production costs. On the other hand, the separator provided in this application is not bonded during winding and storage processes, thereby facilitating subsequent use during preparation of the battery cell. In addition, optionally, a median particle size by volume of the first organic particles satisfies (Dᵥ90-Dᵥ10)/Dᵥ50≤2.5, and glass transition temperature is 20°C to 100°C, which facilitates improvement of application of the adhesion coating and avoids blocking of the pore of the separator. Finally, optionally, the separator in this application satisfies 0.1 gm⁻²Ω⁻¹≤ρ/R≤1.0 gm⁻²Ω⁻¹, which helps ensure proper surface density of a coating of the separator and further reduces an internal resistance of the separator, thereby satisfying requirements for yield rate of production and kinetic performance of a battery cell.

In some embodiments, optionally, a ratio of dry weights of the first organic particles, the second organic particles, and the pressure-sensitive binder is 20-90:0-60:8-20, optionally 30-80:30-50:10-15.

When a weight ratio of the first organic particles, the second organic particles, and the pressure-sensitive binder is within the foregoing range, infiltration and uniformity of distribution of the electrolyte can be effectively improved, thereby fully exerting a synergistic advantage of each component and improving the adhesion performance, kinetic performance and cycling performance.

It should be noted that, in this application, the first organic particles are usually designed as primary particles, and the second organic particles are usually designed as secondary particles. Under joint action of the first organic particles and the second organic particles, an adhesion force between the separator and the electrode plate can be enhanced, and a moderate and non-uniform pore structure can be further effectively ensured for the separator, which helps ensure that coating surface density ρ of the coating on the separator and the resistance R of the separator at 25°C satisfy 0.1 gm⁻²Ω⁻¹≤ρ/R≤1.0 gm⁻²Ω⁻¹. For example, p/R of the coating is 0.52 gm⁻²Ω⁻¹, 0.65 gm⁻²Ω⁻¹, 0.8 gm⁻²Ω⁻¹, 0.83 gm⁻²Ω⁻¹, 0.9 gm⁻²Ω⁻¹, 0.96 gm⁻²Ω⁻¹, or 0.98 gm⁻²Ω⁻¹, and is within a range of any two of these values.

It should be noted that, in this application, the first organic particles and the pressure-sensitive binder each include an organic polymer. For ease of distinction, the organic polymer included in the first organic particles may also be referred to as a "first organic polymer", and the organic polymer in the pressure-sensitive binder is referred to as a "third organic polymer".

In some embodiments, optionally, coating surface density of the coating on the separator is 0.1 g/m² to 1.9 g/m², optionally 0.25 g/m² to 1.5 g/m², and more optionally 0.65 g/m² to 1.2 g/m².

In addition, during a preparation process of the battery cell, the first organic particles are the primary particles, and can help form a uniform coating interface and effectively alleviate a tab misalignment problem in a preparation process of the battery cell.

### [First organic particles]

In some embodiments, optionally, a median particle size by volume Dᵥ50 of the first organic particles is 3 µm to 36 µm, optionally 5 µm to 20 µm. For example, the median particle size by volume Dᵥ50 may be 3 µm, 5 µm, 20 µm, 30 µm, or 36 µm, and is within a range of any two of these values.

When the median particle size by volume Dᵥ50 of the first organic particles is within the foregoing range, the first organic particles have a larger median particle size. On the one hand, an effective contact area between the electrode plate and the separator can be increased, and then, adhesion between the electrode plate and the separator is further greatly improved. On the other hand, these organic particles can be prevented from penetrating into the pore formed on the substrate of the separator. In addition, relatively large gaps due to the large size can resolve a problem of poor air permeability of the separator, reduce possibility of blocking the pore of the separator by small particles, and reduce a risk of increasing an internal resistance. In addition, because it is difficult to recombine corners during the manufacture process of the battery cell (especially for a prismatic battery), the separator and the electrode plate are not adhered at the corners, and the separator cannot effectively release accumulated stress of the electrode plate to surroundings. In addition, due to a structural characteristic of the battery cell module of the prismatic battery, the corners are fixed, which makes it difficult to release stress formed due to expansion of the electrode plate. Therefore, if there is not enough space at the corner of the battery, when cycling has been performed to some extent, that is, when stress is greater than elongation of copper and aluminum foil, the electrode plate breaks and further punctures the separator, thereby causing a serious safety hazard. However, in this application, because the first organic particles have a relatively large median particle size and specific compressibility, when the first organic particles exist at the corner of the battery cell, space for releasing stress can be effectively provided at the corner. In addition, the first organic particles satisfy (Dᵥ90-Dᵥ10)/Dᵥ50≤2.5, which ensures small thickness fluctuation of the separator, thereby avoiding an increase in tab misalignment due to the change in the thickness of the separator and avoiding a decrease in the yield rate of battery cell production.

In some embodiments, optionally, glass transition temperature of the first organic particles is 20°C to 100°C, optionally 30°C to 80°C. For example, the glass transition temperature may be 20°C, 30°C, 40°C, 60°C, 80°C, or 100°C, and is within a range of any two of these values.

When the glass transition temperature of the first organic particles is within the foregoing range, the first organic particles can withstand swelling of the electrolyte. On the one hand, no excessive electrolyte is consumed, and a residual monomer is not easy to be precipitated in the electrolyte and block the separator, which otherwise affects the kinetic performance of the battery cell. On the other hand, adhesion between the separator and the electrode plate is not greatly reduced, and the electrode plate is not easily damaged by the first organic particles, which otherwise decreases the safety performance.

In some embodiments, optionally, a weight-average molecular weight of the organic polymer in the first organic particles is 500×10³ g/mol to 1000×10³ g/mol, optionally 800×10³ g/mol to 1000×10³ g/mol. The weight-average molecular weight can be measured in a method commonly used in the art. For example, the weight-average molecular weight can be measured through gel permeation chromatography with reference to GB/T 21863-2008.

In some embodiments, optionally, the first organic particles in the separator in this application include an organic polymer and an inorganic substance, and the organic polymer in the first organic particles is formed by polymerizing at least the following monomers:
a first polymer monomer, where the first polymer monomer has at least one ester bond and is optionally one or more of methacrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroethyl methacrylate, glycidyl methacrylate, or trimethylolpropane triacrylate, and more optionally is one or more of methyl methacrylate, lauryl acrylate, lauryl methacrylate, or trimethylolpropane triacrylate;
a second polymer monomer, where the second polymer monomer has at least one cyanide bond and is optionally one or more of acrylonitrile, methacrylonitrile, and ethacrylonitrile, and more optionally is one or more of acrylonitrile and methacrylonitrile; and
a third polymer monomer, where the third polymer monomer has at least one amide bond and is optionally one or more of acrylamide, N-methylol acrylamide, and N-butoxy methacrylamide, and more optionally is one or more of acrylamide and N-methylol acrylamide; where
optionally, a weight ratio of the first polymer monomer, the second polymer monomer, and the third polymer monomer is 1:0-0.8:0.05-0.75, optionally 1:0.1-0.6:0.1-0.6.

When the organic polymer is formed by polymerizing the foregoing polymer monomers, the prepared first organic particles have good adhesion performance and also have relatively low glass transition temperature. In addition, density ρ of a surface of the separator on which the adhesion substance is sprayed and the resistance R of the separator satisfy 0.1 gm⁻²Ω⁻¹≤ρ/R≤1.0 gm⁻²Ω⁻¹, which helps reduce the resistance of the separator and improve the kinetic performance of the battery using the separator.

In some embodiments, optionally, a percentage of the organic polymer in the first organic particles is 50% to 99.9%, optionally 60% to 99%, and more optionally 70% to 99% based on a total dry weight of the first organic particles; and
a percentage of the inorganic substance in the first organic particles is 0.1% to 50%, optionally 1% to 40%, and more optionally 1% to 30% based on the total dry weight of the first organic particles.

An excessively small amount of organic polymer or an excessively large amount of inorganic substance in the first organic particles may cause insufficient overall adhesion performance of the first organic particles, or even cause failure of maintaining the organic polymer and the inorganic substance as a whole. When the percentage of inorganic substance in the first organic particles is excessively low, flame retardancy of the first organic particles may be poor.

In some embodiments, optionally, a weight ratio of the organic polymer to the inorganic substance in the first organic particles is 99:1 to 1:1, optionally 70:30 to 1:1.

When a weight ratio of the organic polymer to the inorganic substance in the first organic particles is within the foregoing range, a synergistic function of the organic polymer and the inorganic substance is fully exerted, so that the first organic particles have good adhesion performance and flame retardancy.

In some embodiments, optionally, based on a total weight of the organic polymer in the first organic particles, a percentage of the first polymer monomer is 35wt% to 80wt%, optionally 45wt% to 70wt%;
a percentage of the second polymer monomer is 0wt% to 30wt%, optionally 5wt% to 25wt%; and
a percentage of the third polymer monomer is 5wt% to 40wt%, optionally 8wt% to 35wt%.

When percentages of the first polymer monomer, the second polymer monomer, and the third polymer monomer are all within the foregoing range, a synergistic advantage of each monomer is fully exerted, the adhesion performance of the organic polymer is improved, and the organic polymer has proper glass transition temperature, thereby improving the adhesion performance of the first organic particles.

In some embodiments, optionally, the inorganic substance in the first organic particles is selected from one or more of an oxide of silicon, aluminum, calcium, zinc, and magnesium, and sodium sulfate, sodium benzoate, calcium carbonate, and a modified material thereof, optionally is one or more of silicon oxide, silica sol, aluminum oxide, zinc oxide, magnesium oxide, and sodium benzoate, and more optionally is one or more of gas-phased silicon dioxide, silicon micropowder, aluminum oxide, and sodium benzoate.

In some embodiments, optionally, surfaces of the first organic particles are uneven, and inorganic oxide clusters with a particle size of 10 nm to 200 nm are evenly distributed on the surfaces.

This application further provides a method for preparing first organic particles in this application, including at least the following steps:
Step 1: Provide a first polymer monomer, a second polymer monomer, and a third polymer monomer, where a weight ratio of the first polymer monomer, the second polymer monomer, and the third polymer monomer is 1:0-0.8:0.05-0.75, optionally 1:0.1-0.6:0.1-0.6.
Step 2: Polymerize polymer monomers to obtain an organic polymer.
Step 3: Add an organic solvent and an inorganic substance to the organic polymer in step 2, and stir a resulting mixture to obtain a mixed slurry.
Step 4: Dry, grind, and pulverize the mixed slurry in step 3, to obtain the first organic particles in this application.

It should be noted that the polymer monomers can be polymerized in a polymerization method commonly used in the art, for example, emulsion polymerization or suspension polymerization.

In some embodiments, optionally, additives can also be added to a polymerization system of the polymer monomers, for example, an emulsifier such as sodium lauryl sulfate and a polymerization initiator such as ammonium persulfate.

### [Pressure-sensitive binder]

The pressure-sensitive binder in this application includes an organic polymer and a plasticizer.

In some embodiments, optionally, a weight ratio of the organic polymer to the plasticizer included in the pressure-sensitive binder is (4-25):1, optionally (4-11):1.

A relative percentage of the plasticizer included in the pressure-sensitive binder is within the foregoing range, which ensures a greater adhesion force between the electrode plate and the separator and improves the adhesion performance and cycling performance, without significantly increasing the resistance of the separator.

In some embodiments, optionally, the pressure-sensitive binder has a core-shell structure, and both core and shell of the core-shell structure include the organic polymer and the plasticizer, where in the core, a weight ratio of the organic polymer to the plasticizer is (3-4):1, optionally (3.2-3.8):1, and in the shell structure, a weight ratio of the organic polymer to the plasticizer is (7-9): 1, optionally (7.5-8.5): 1.

A core and a shell of the core-shell structure both include the organic polymer and the plasticizer, which can further improve pressure-sensitive performance of the pressure-sensitive binder, thereby improving applicability of the separator to different pressure conditions, helping reduce the resistance of the separator, and improving the kinetic performance of the separator. In addition, the pressure-sensitive binder includes the plasticizer. Under specific pressure (for example, 1 MPa to 2 MPa), the plasticizer can quickly migrate between the organic polymer and a main material of the separator, to plasticize a binder polymer, so that a molecular chain of the binder polymer is spread out and subject to an intermolecular hydrogen bonding reaction along with, for example, a binder of styrene-butadiene rubber (SBR) and a thickener of sodium carboxymethyl cellulose (CMC) in the negative electrode plate, and a binder such as polyvinylidene fluoride (PVDF) in the positive electrode plate, thereby improving interfacial wetting and enhancing riveting between two interfaces. Under 2 MPa or above, the core structure is crushed, and the plasticizer in the core is released, which can further enhance the foregoing effects.

In some embodiments, optionally, in the pressure-sensitive binder, a part of the plasticizer is grafted onto the organic polymer; and optionally, in the pressure-sensitive binder, based on a weight of the plasticizer, at least 5wt% plasticizer is grafted onto the organic polymer. For example, 0wt%, 3wt%, 5wt%, or 8wt% plasticizer may be grafted on the organic polymer, and optionally 8wt% plasticizer is grafted on the organic polymer.

When a part of the plasticizer is grafted on the organic polymer, the plasticizer can be prevented from migrating into the electrolyte in a large amount during cycling, thereby avoiding consumption of various functional additives of the electrolyte, which otherwise increases the resistance of the separator and affects the kinetic performance of the battery cell. Especially when at least 5wt% plasticizer is grafted on a main chain of the organic polymer, the separator and the electrode plate can be "apparently severed but actually connected", which can further improve durability of adhesion at room temperature, reduce rebound, and further ensure that the plasticizer does not migrate into the electrolyte in a large amount during cycling or affect the performance of the battery.

It should be noted that a grafting ratio can be adjusted in a method known in the art. For example, synthesis time can be adjusted to change the grafting ratio. For details, refer to a patent application No. PCT/CN2021/143069.

The grafting ratio can be tested in a method commonly used in the art, for example, infrared testing. For example, the grafting ratio can be tested in the following steps: testing the organic polymer, the plasticizer, and the pressure-sensitive binder to obtain Fourier transform infrared spectra thereof, where a peak different from those of the organic polymer and the individual plasticizer occurs at a location of the pressure-sensitive binder at 1500 cm⁻¹ to 1700 cm⁻¹, this peak represents the grafted plasticizer, and an area under the peak represents an amount of grafted plasticizer; and based on this, calculating the grafting ratio of the grafted plasticizer.

In some embodiments, optionally, a median particle size by volume Dᵥ50 of the pressure-sensitive binder is 0.3 µm to 3.5 µm, optionally 0.8 µm to 2.0 µm. For example, the median particle size by volume Dᵥ50 may be 0.3 µm, 0.5 µm, 0.8 µm, 1.0 µm, 2.0 µm, 3.0 µm, or 3.5 µm, and is within a range of any two of these values.

With a proper particle size, the pressure-sensitive binder is more uniformly distributed on the first or second organic particles, adhesion between the core and shell of the pressure-sensitive binder and the electrode plate can be better exerted under specific pressure, and the resistance of the separator is effectively improved.

In some embodiments, optionally, glass transition temperature of the pressure-sensitive binder is -50°C to 100°C, optionally -45°C to 60°C.

When the glass transition temperature of the pressure-sensitive binder polymer is within the foregoing range, the adhesion force at room temperature is better ensured, thereby avoiding shrinkage and adhesion of the separator caused by the adhesion force greater than 0.08 N/m at room temperature under 1 MPa and also avoiding weak adhesion between the separator and the electrode plate caused by the adhesion force less than 0.1 N/m at room temperature under 2 MPa, which otherwise is not conducive to shaping of the battery cell.

In some embodiments, optionally, in the pressure-sensitive binder, the organic polymer includes a copolymer formed by copolymerization of a mixture of at least one of the following first monomer group, at least one of the following second monomer group, at least one of the following third monomer group, and at least one of reactive dispersants:
a first monomer group, where the first monomer group generally has a melting point higher than 80°C and includes acrylic acid, methacrylic acid, methyl methacrylate, tert-butyl methacrylate, isobornyl methacrylate, methylol acrylamide, acrylamide, styrene, and acrylonitrile;
a second monomer group, where the second monomer group generally has a melting point that is not higher than 80°C, and includes C₄-C₂₂ alkyl acrylate such as isobutyl acrylate, isooctyl acrylate, tert-butyl acrylate, 2-ethylhexyl acrylate (isooctyl acrylate), cyclohexyl acrylate, ethyl methacrylate, isobutyl methacrylate, 2-ethylhexyl methacrylate, n-hexyl methacrylate, cyclohexyl methacrylate, and benzyl methacrylate, 2-hydroxyethyl acrylate, 2-hydroxypropyl methacrylate, ethyleneurea ethyl methacrylate, dicyclopentenyl ethoxy methacrylate, tetrahydrofuryl methacrylate, trifluoroethyl methacrylate, dimethylaminoethyl methacrylate, diethylaminoethyl methacrylate, propylene methacrylate, and dicyclopentenyl ethoxy methacrylate;
a third monomer group, where the third monomer group is a cross-linking monomer, includes at least one of a hydroxyl group, an amino group, and double bonds, and includes 2-hydroxyethyl methacrylate, 2-hydroxypropyl methacrylate, glycidyl acrylate, glycidyl methacrylate, dimethylaminoethyl methacrylate, diethylaminoethyl methacrylate, vinyltrimethoxysilane, vinyltriethoxysilane, vinyltriisopropoxysilane, γ-methacryloxypropyltrimethoxysilane, N-methylol acrylamide, N-butoxymethacrylamide, diacetone acrylamide (DAAM), acetoacetate ethyl methacrylate (AAEM), divinylbenzene, epoxy resin with an epoxy value of 0.35 to 0.50, and divinylbenzene; and
reactive dispersants, including polyvinyl alcohol, polypropylene alcohol, polypropylene glycol, polyethylene glycol, and polyvinyl acid alcohol.

In some embodiments, optionally, a weight ratio of a monomer in the first monomer group, a monomer in the second monomer group, a monomer in the third monomer group, and the reactive dispersant is 35-45:45-60:4-8:2-5.

In this application, the reactive dispersant has a dispersion function while being co-polymerized with the foregoing first monomer, second monomer, and third monomer when the pressure-sensitive binder is synthesized. Optionally, alcoholysis degrees of these reactive dispersants are greater than or equal to 85%, and the number-average degree of polymerization is 400 to 2000; and optionally, the alcoholysis degree is greater than or equal to 88%, and the number-average degree of polymerization is 500 to 1600.

In some embodiments, optionally, the plasticizer is selected from one or more of the following: C₄-C₁₀ alkyl glycerol diether or monoether, C₄-C₁₀ carboxylic acid glycerol monoester or diester, and C₄-C₁₀ alkyl propylene glycol monoether or glycerin.

In some embodiments, optionally, the pressure-sensitive binder polymer can be prepared with reference to Patent Application No. PCT/CN2021/143069, which is incorporated herein by reference in its entirety.

In some embodiments, optionally, the pressure-sensitive binder polymer can be synthesized in a method including the following steps:
Step 1: Add an emulsifier and an oligomer to a solvent, and disperse a resulting mixture uniformly, to obtain a first mixed solution.
Step 2: Add a stabilizer to the first mixed solution, and disperse a resulting mixture uniformly, to obtain a second mixed solution.
Step 3: Add an aqueous initiator to the second mixed solution, and mix a resulting mixture uniformly to react at 60°C to 80°C for 20 to 60 minutes to obtain a third mixed solution.
Step 4: Add a reaction monomer mixture into the third mixed solution uniformly dropwise during stirring, to obtain a fourth mixed solution after 80 to 100 minutes, for example, 80 minutes.
Step 5: Warm the fourth mixed solution to 80°C to 90°C, for example, 84°C, and continue stirring the fourth mixed solution for 120 to 240 minutes, for example, 180 minutes, to obtain a fifth mixed solution.
Step 6: Add a plasticizer to the fifth mixed solution to react at 80°C to 90°C, for example, 84°C, for 120 to 240 minutes, for example, 180 minutes, to obtain a sixth mixed solution.
Step 7: Add an aqueous initiator to the sixth mixed solution, to react at 60°C to 80°C, for example, 72°C, for 20 to 60 minutes, for example, 30 minutes, to obtain a seventh mixed solution.
Step 8: Add a reaction monomer mixture into the seventh mixed solution uniformly dropwise during stirring, to obtain a fourth mixed solution after 100 to 160 minutes, for example, 120 minutes.
Step 9: Add a plasticizer to the eighth mixed solution to react at 80°C to 90°C, for example, 84°C, for 120 to 240 minutes, for example, 180 minutes, to obtain a ninth mixed solution.
Step 10: Cool the ninth mixed solution to below 50°C, and filter the ninth mixed solution to obtain the pressure-sensitive binder.

In some embodiments, optionally, the solvent used in step 1 is deionized water.

In some embodiments, optionally, 0.1wt% to 1wt% emulsifier and 2wt% to 3wt% oligomer are sequentially added in step 1 based on a total weight of the reaction monomer mixture (including the monomer in the first monomer group, the monomer in the second monomer group, the monomer in the third monomer group, and the reactive dispersant), an additive (including an emulsifier, a stabilizer, and an aqueous initiator), and the plasticizer added when the pressure-sensitive binder is synthesized hereinafter.

In some embodiments, optionally, the emulsifier is selected from one or more of allyl sulfonate, polyoxyethylene alkyl ether, polyoxyethylene aryl ether, and sorbitol.

In some embodiments, optionally, the stabilizer is selected from one or more of polyethylene oxide, allyl polyether sulfate, methylene succinic acid (itaconic acid), styrene sulfonic acid, sodium vinyl sulfonate, and sodium nano-cellulose.

In some embodiments, optionally, the aqueous initiator is selected from one or more of sodium bicarbonate, benzoyl peroxide, lauroyl peroxide, cumene hydroperoxide, tert-butyl hydroperoxide, di-t-butyl peroxide, dicumyl peroxide, tert-butyl peroxybenzoate, tert-butylperoxy valerate, methyl ethyl ketone peroxide, cyclohexanone peroxide, diisopropyl peroxydicarbonate, peroxydicarbonate dicyclohexyl ester, potassium persulfate, sodium persulfate, ammonium persulfate, azobisisobutyronitrile, azobisisoheptanonitrile, and ammonium persulfate-sodium bicarbonate.

In some embodiments, optionally, the oligomer has number-average molecular weight less than or equal to 1000 and a melting point of 0°C to 30°C.

In some embodiments, optionally, the oligomer is selected from, for example, stearyl methacrylate.

In some embodiments, optionally, uniform dispersion can be achieved in the step 1 at a rotation speed of 8000 r/min to 12000 r/min (revolutions per minute), for example, 10000 r/min, for 20 to 60 minutes, for example, 50 minutes.

In some embodiments, optionally, an operation is performed in step 1 at temperature of 20°C to 40°C, for example, 25°C.

In some embodiments, optionally, in step 2, 1wt% to 4wt% stabilizer is added to the first mixed solution.

In some embodiments, optionally, uniform mixing can be achieved in step 2 at 6000 r/min to 8000 r/min, for example, 6500 r/min, for 20 to 60 minutes, for example, 30 minutes.

In some embodiments, optionally, an operation is performed in step 2 at temperature of 20°C to 60°C, for example, 45°C.

In some embodiments, optionally, in step 3, 0.05wt% to 0.5wt% aqueous initiator is added to the second mixed solution.

In some embodiments, optionally, uniform mixing can be achieved in step 3 at 8000 r/min to 12000 r/min, for example, 8000 r/min, for 20 to 60 minutes, for example, 30 minutes.

In some embodiments, optionally, an operation is performed in step 3 at temperature of 60°C to 80°C, for example, 72°C.

In some embodiments, optionally, in step 4, 35wt% to 45wt% reaction monomer mixture is added to the third mixed solution dropwise.

In some embodiments, optionally, a rotation speed in step 4 is 100 r/min to 1000 r/min, for example, 400 r/min.

In some embodiments, optionally, in the step 4, dripping is preferably completed exactly at a 60th minute.

In some embodiments, optionally, a stirring speed in step 5 is 12000 r/min to 18000 r/min, for example, 15000 r/min.

In some embodiments, optionally, in step 6, 10wt% to 20wt% plasticizer such as glycerinum is added to the fifth mixed solution.

In some embodiments, optionally, a stirring speed in step 6 is 12000 r/min to 18000 r/min, for example, 15000 r/min.

In some embodiments, optionally, in step 7, 0.05wt% to 0.5wt% aqueous initiator is the added to the sixth mixed solution.

In some embodiments, optionally, a stirring speed in step 7 is 8000 r/min to 12000 r/min, for example, 8000 r/min.

In some embodiments, optionally, in step 8, 30wt% to 40wt% reaction monomer mixture is added to the seventh mixed solution dropwise.

In some embodiments, optionally, a rotation speed in step 8 is 100 r/min to 1000 r/min, for example, 400 r/min.

In some embodiments, optionally, in step 8, the reaction monomer mixture is optionally completely added dropwise exactly at a 60th minute.

In some embodiments, optionally, in step 9, 5wt% to 20wt% plasticizer such as glycerinum is added to the eighth mixed solution.

In some embodiments, optionally, a stirring speed in step 9 is 12000 r/min to 18000 r/min, for example, 15000 r/min.

It should be noted that a person skilled in the art can also synthesize a pressure-sensitive binder polymer with a non-core-shell structure with reference to the foregoing method (steps 7 to 9 are omitted, and weight percentages of the added plasticizer and reaction monomer mixture are correspondingly changed).

### [Second organic particles]

A coating of the separator in this application further optionally includes the second organic particles.

In some embodiments, optionally, the second organic particles are a polymer of one or more monomers including the following groups: halogen, a phenyl group, an epoxy group, a cyano group, an ester group, and an amide group.

In some embodiments, optionally, the second organic particles are selected from at least one of the following: a homopolymer or copolymer of fluorine-containing alkenyl monomer units, a homopolymer or copolymer of alkylene monomer units, a homopolymer or copolymer of unsaturated nitrile monomer units, a homopolymer or copolymer of an alkylene oxide monomer units, a dimer, homopolymer, or copolymer of monosaccharide monomer units, and modified compounds of the preceding homopolymers or copolymers.

In some embodiments, the fluoroalkenyl monomer unit is selected from one or more of difluoroethylene, vinylidene fluoride, trifluoroethylene, chlorotrifluoroethylene, tetrafluoroethylene, hexafluoropropylene, or a derivative thereof.

In some embodiments, the alkenyl monomer unit is selected from one or more of ethylene, propylene, butadiene, isoprene, styrene, or a derivative thereof.

In some embodiments, the unsaturated nitrile monomer unit is selected from one or more of acrylonitrile, methyl acrylonitrile, or a derivative thereof.

In some embodiments, the epoxidate monomer unit is selected from one or more of ethylene oxide, propylene oxide, or a derivative thereof.

In some embodiments, the monosaccharide monomer unit is selected from glucose or a derivative thereof.

In some embodiments, the second organic particles are selected from at least one of the following: polyvinylfluoride, polyvinylidene fluoride, polyvinylidene fluoride-co-hexafluoropropylene, polyvinylidene fluoride-co-trichloroethylene, polystyrene-co-methyl methacrylate, polystyrene-co-butyl acrylate, styrene-butyl acrylate-isooctyl acrylate, polymethyl methacrylate, polyacrylonitrile, polyvinyl acetate, polyethylene-co-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, and cyanoethyl sucrose.

In some embodiments, the second organic particles may be selected from at least one of the following: polyvinylidene fluoride-co-hexafluoropropylene, polystyrene-co-butyl acrylate, styrene-butyl acrylate-isooctyl acrylate, polyvinylfluoride, polyvinylidene fluoride, and polyvinylidene fluoride-co-trichloroethylene.

The second organic particles can be similar to the first organic particles, and are prepared in a polymerization method commonly used in the art, for example, emulsion polymerization or suspension polymerization.

In some embodiments, the second organic particles satisfy one or more of the following conditions:
(1) a median particle size by volume Dᵥ50 of the second organic particles is 2 µm to 20 µm, optionally 6 µm to 15 µm;
(2) a melting point of the second organic particles is 130°C to 160°C, optionally 138°C to 150°C; and
(3) a weight-average molecular weight of the second organic particles is 400×10³ g/mol to 1000×10³ g/mol, optionally 450×10³ g/mol to 650×10³ g/mol.

When the second organic particles within the foregoing particle size range are used, during normal working of the secondary battery, sufficient and non-uniformly distributed gaps can be further formed between the first organic particles and the second organic particles, to ensure a smooth ion transmission channel, so that the battery has a good cycling performance. Under joint action of the first organic particles and the second organic particles, an adhesion force between the separator and the electrode plate can be enhanced, and a moderate and non-uniform pore structure can be further effectively ensured for the separator.

When the melting point of the second organic particles is within the foregoing range, the second organic particles can withstand swelling of the electrolyte. On the one hand, no excessive electrolyte is consumed, and a residual monomer is not easy to be precipitated in the electrolyte and block the separator, which otherwise further affects the kinetic performance of the battery cell. On the other hand, adhesion between the separator and the electrode plate is not greatly reduced, and the electrode plate is not easily damaged by the second organic particles, which otherwise decreases the safety performance.

For example, a median particle size by volume Dᵥ50 of the second organic particles may be 2 µm, 8 µm, 10 µm, or 12 µm.

In some embodiments, the separator satisfies one or more of the following conditions:
(1) porosity of the substrate is 10% to 95%;
(2) a pore diameter of the substrate is 20 nm to 60 nm;
(3) thickness of the substrate is 3 µm to 12 µm, optionally 5 µm to 9 µm; and
(4) the substrate is a film or non-woven fabric selected from one or more of the following: polyethylene, polypropylene, polyethylene terephthalate, polybutylene terephthalate, polyester, polyacetal, polyamide, polycarbonate, polyimide, polyether-ether-ketone, polyaryletherketone, polyetherimide, polyamide-imide, polybenzimidazole, polyethersulfone, polyphenylene oxide, a cycloolefin copolymer, polyphenylene sulfide, and polyvinyl naphthaline.

When the separator satisfies one or more of the foregoing conditions, the adhesion performance of the separator and the kinetic performance and the cycling performance of the corresponding secondary battery are further improved.

In some embodiments, optionally, in the separator, a weight ratio of the first organic particles to the second organic particles is 10-100:0-90, optionally 20-90:0-60; or
optionally, a ratio of a total weight of the first organic particles and the second organic particles to a weight of the pressure-sensitive binder is 20-92:8-20, optionally 60-90:10-15.

For example, a weight ratio of the first organic particles to the second organic particles may be 100:0, 90:10, 70:30, 50:50, 40:60, 65:25, or 75:10, and is within a range of any two of these ratios.

For example, a ratio of a total weight of the first organic particles and the second organic particles to a weight of the pressure-sensitive binder may be 60:10, 80:10, 85:15, 90:10, or 110:10, and is within a range of any two of these ratios.

In some embodiments, average thickness of the coating is 0.8 µm to 22 µm, optionally 2 µm to 15 µm. For example, the average thickness may be 0.8 µm, 2 µm, 3 µm, 4 µm, 6 µm, 10 µm, 12 µm, 15 µm, 20 µm, or 22 µm, and is within a range of any two of these values.

### Preparation method of separator

A second aspect of this application provides a preparation method of the separator in first aspect of this application, including the following steps:
(S1) adding first organic particles and a dispersant to a solvent to form a first polymer solution;
(S2) adding a pressure-sensitive binder to the first polymer solution obtained in step S1, and mixing a resulting mixture fully to form a second polymer solution;
(S3) optionally, adding second organic particles to the second polymer solution obtained in step S2, and mixing a resulting mixture fully to form a third polymer solution; and
(S4) applying the second polymer solution obtained in step S2 or the third polymer solution obtained in step S3 onto at least one surface of a substrate, and drying the at least one surface to obtain the separator;
where the separator includes the substrate and a coating applied on at least one surface of the substrate, and the coating includes 40wt% to 90wt% first organic particles, 2wt% to 15wt% pressure-sensitive binder, and optional 0wt% to 50wt% second organic particles; where the first organic particles include an organic polymer and an inorganic substance, and the pressure-sensitive binder includes an organic polymer and a plasticizer; optionally, a median particle size by volume of the first organic particles satisfies (Dᵥ90-Dᵥ10)/Dᵥ50≤2.5, optionally (Dᵥ90-Dᵥ10)/Dᵥ50≤2, and more optionally (Dᵥ90-Dᵥ10)/Dᵥ50≤1.8, and glass transition temperature of the first organic particles is 20°C to 100°C, optionally 30°C to 80°C; and optionally, the separator satisfies 0.1 gm⁻²Ω⁻¹≤ρ/R≤1.0 gm⁻²Ω⁻¹, optionally 0.5 gm⁻²Ω⁻¹≤ρ/R≤0.9 gm⁻²Ω⁻¹, and more optionally 0.6 gm⁻²Ω⁻¹≤ρ/R≤0.8 gm⁻²Ω⁻¹, where ρ represents surface density of the coating on the substrate, and R represents resistance of the separator at 25°C.

In some embodiments, an inclusive example of dispersants used in step S1 may include acrylate (such as BYK 22136), branched alcohol polyether (such as Dow TMN-6), polyethylene glycol trimethylnonyl ether, or a mixture thereof.

In some embodiments, an inclusive example of the solvent used in step S1 may include acetone, tetrahydrofuran, dichloromethane, chloroform, dimethylformamide, N-methyl-2-pyrrolidone, cyclohexane, water, or a mixture thereof.

In some embodiments, an inclusive example of a coating method used in step S4 may include dip coating, die coating, roll coating, comma coating (comma coating), spin coating, or a combination thereof. Surface density of double-sided coating after drying can be 0.32 g/m² to 1.92 g/m².

### [Secondary battery]

A third aspect of this application provides a secondary battery, where the secondary battery has good safety performance and kinetic performance.

Normally, the secondary battery includes a positive electrode plate, a negative electrode plate, an electrolyte, and a separator. During a charging process of a battery, active ions migrate between the positive electrode plate and the negative electrode plate for intercalation and deintercalation. The electrolyte has a function of conducting ions between the positive electrode plate and the negative electrode plate. Secondary batteries using the electrolyte solution and some secondary batteries using a semi-solid electrolyte further include separators. The separator is sandwiched between the positive electrode plate and the negative electrode plate to mainly prevent a short circuit between positive and negative electrodes and to allow the ions to pass through.

In the secondary battery provided in this application, the separator can be the separator provided in the first aspect of this application. The separator has good ionic conductivity and adhesion performance at room temperature, and at room temperature (usually 20°C to 30°C, for example, 25°C), the separator has a resistance below 1.6 Ω, especially, a resistance below 1.2 Q, and an adhesion force is below 0.1 N/m under 1 MPa, especially, below 0.08 N/m. Under 2 MPa or above at room temperature, an adhesion force between the separator and the electrode plate is above 0.15 N/m, especially, above 0.4 N/m. Under 2 MPa or above at 95°C, an adhesion force between the separator and the electrode plate is below 4.9 N/m, especially, below 1.8 N/m.

When the secondary battery is prepared by using the separator provided in the first aspect of this application, an adhesion force F1 between the positive electrode plate and the separator at room temperature of 25°C under 2 MPa or above and an adhesion force F2 between the positive electrode plate and the separator at 95°C under 2 MPa or above satisfy 1.2≤F2/F1≤4, optionally 1.5≤F2/F1≤3.8. In addition, the surface density ρ of the coating on the substrate and the resistance R of the separator at 25°C satisfy 0.1 g·m⁻²·Ω⁻¹≤ρ/R≤1.0 g·m⁻²·Ω⁻¹, optionally 0.5 g·m⁻²·Ω⁻¹≤ρ/R≤0.9 g·m⁻²·Ω⁻¹, and more optionally 0.6 g·m⁻²·Ω⁻¹≤ρ/R≤0.8 g·m⁻²·Ω⁻¹. When F2/F1>4, insufficient pre-cooling pressing in a battery cell winding process may causes fluffiness of the battery cell, misalignment of the separator and the electrode plate, even collapse of an inner ring of the electrode plate, or a safety hazard of a lap-welded short circuit of the electrode plate. In addition, improperly excessively large adhesion during hot pressing may make it difficult to achieve electrolyte infiltration, which affects formation efficiency of the battery cell and further causes a black spot or even lithium precipitation after full charge, thereby seriously affecting the kinetic performance of the battery cell and the safety performance of the battery cell. When F2/F1<1.2, although the pre-cooling pressing satisfies a process requirement, thickness and width of the battery cell may exceed a specification and fluffiness is caused during a hot-pressing procedure through a tunnel furnace, or the battery cell may become fluffy after standing over a period of time, which may cause a decrease in a yield rate of the battery cell and a decrease in production efficiency. In addition, a greater risk is that after the battery cell is placed into the shell and the electrolyte is injected, hardness of the battery cell decreases extremely, which may separate the electrode plate from the separator and increase expansion force of the battery cell. As a more serious consequence, adhesion between the separator and the electrode plate is excessively low, which cannot restrain rebound of the negative electrode, thereby causing wrinkling and lithium precipitation, and deteriorating the cycling performance of the battery cell.

### [Positive electrode plate]

The positive electrode plate includes a positive electrode current collector and a positive electrode membrane that is provided on at least one surface of the positive electrode current collector and that includes a positive electrode active material. For example, the positive electrode current collector includes two opposite surfaces in its thickness direction, and the positive electrode membrane is disposed on either or both of the two opposite surfaces of the positive electrode current collector.

A material with good conductivity and mechanical strength may be used as the positive electrode current collector. In some embodiments, the positive electrode current collector may be aluminum foil.

The positive electrode active material is not limited to a specific type in this specification. The materials known in the art that can be used for positive electrodes of secondary batteries can be used, and can be selected by those skilled in the art based on an actual need.

In some embodiments, the secondary battery provided in this application is a lithium-ion secondary battery. The positive electrode active material includes a positive electrode active material applied to the lithium-ion secondary battery well-known in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. Examples of the lithium transition metal oxide may include but are not limited to at least one of lithium cobalt oxide (for example, LiNiO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, optionally, a weight percentage of the positive electrode active material in the positive electrode membrane is 75% to 99%, optionally 80% to 97%.

In some embodiments, the positive electrode membrane further optionally includes a binder. The binder is not limited to any specific type, and may be selected by a person skilled in the art as required. For example, the binder used for the positive electrode membrane may include one or more of polyvinylidene fluoride (PVDF) and polytetrafluoroethylene (PTFE).

In some embodiments, optionally, a weight percentage of the binder in the positive electrode membrane is 0.1% to 3.5%, optionally 0.5% to 3%.

In some embodiments, the positive electrode membrane further optionally includes a conductive agent. The conductive agent is not specifically limited to any particular type, and may be selected by a person skilled in the art based on an actual need. For example, the conductive agent used for the positive electrode membrane may include one or more of graphite, superconducting carbon, acetylene black, carbon black, Ketjen black, carbon dots, carbon nanotubes, graphene, and carbon nanofiber.

In some embodiments, optionally, a weight percentage of the conductive agent in the positive electrode membrane is 0.05% to 5%, optionally 0.5% to 3%.

In some embodiments, steps of preparing a positive electrode plate by using a positive electrode active material may include: dispersing a positive electrode active material, a binder, and an optional conductive agent in a solvent, where the solvent may be N-methylpyrrolidone, and stirring a resulting mixture uniformly via a vacuum mixer, to obtain a positive electrode slurry; and uniformly applying the positive electrode slurry on aluminum foil of a positive electrode current collector, drying the positive electrode slurry at room temperature, transferring the positive electrode slurry to an oven for drying, and then performing cold pressing and slitting to obtain the positive electrode plate.

### [Negative electrode plate]

The negative electrode plate includes a negative electrode current collector and a negative electrode membrane disposed on at least one surface of the negative electrode current collector. For example, the negative electrode current collector includes two opposite surfaces in its thickness direction, and the negative electrode membrane is disposed on either or both of the two opposite surfaces of the negative electrode current collector.

A material with good conductivity and mechanical strength may be used as the negative electrode current collector to conduct electricity and collect current. In some embodiments, a copper foil may be used as the negative electrode current collector.

The negative electrode membrane includes a negative electrode active material, and steps of preparing the negative electrode plate by using the negative electrode active material may include: dispersing the negative electrode active material, a binder, and an optional thickener and conductive agent in a solvent, where the solvent may be deionized water, to obtain a uniform negative electrode slurry; and applying the negative electrode slurry on a negative electrode current collector and performing processes such as drying and cold pressing to obtain the negative electrode plate.

In some embodiments, the specific type of the negative electrode active material is not specifically limited in this application. The negative electrode plate optionally includes the negative electrode active material that can be used for the negative electrode of the secondary battery. The negative electrode active material may be one or more of a graphite material (for example, artificial graphite and natural graphite), mesocarbon microbead (MCMB for short), hard carbon, soft carbon, a silicon-based material, and a tin-based material.

In some embodiments, optionally, a weight percentage of the negative electrode active material in the positive electrode membrane is 75% to 99% less, optionally 80% to 97%.

In some embodiments, the binder can be selected from one or more of polyacrylic acid (PAA), sodium polyacrylate (PAAS), polyacrylamide (PAM), polyvinyl alcohol (PVA), styrene-butadiene rubber (SBR), sodium alginate (SA), poly(methyl acrylic acid) (PMAA), and carboxymethyl chitosan (CMCS).

In some embodiments, optionally, a weight percentage of the binder in the negative electrode membrane is 0.1% to 3.5%, optionally 0.5% to 2.5%.

In some embodiments, the thickener may be sodium carboxymethyl cellulose (CMC-Na).

In some embodiments, optionally, a weight percentage of the thickener in the negative electrode membrane is 0.04% to 5%, optionally 0.5% to 3%.

In some embodiments, the conductive agent used for the negative electrode plate may be selected from one or more of graphite, superconducting carbon, acetylene black, carbon black, Ketjen black, carbon dots, carbon nanotubes, graphene, and carbon nanofiber.

In some embodiments, optionally, a weight percentage of the conductive agent in the negative electrode membrane is 0.04% to 5%, optionally 0.5% to 3%.

### [Electrolyte]

The electrolyte has a function of conducting ions between the positive electrode plate and the negative electrode plate. This application imposes no specific limitation on a type of the electrolyte, which can be selected based on a need. For example, the electrolyte may be in a liquid state, a gel state, or an all-solid state.

In some embodiments, the electrolyte uses an electrolyte solution. The electrolyte solution includes an electrolytic salt and a solvent.

In some embodiments, the electrolytic salt may be selected from one or more of LiPF₆ (lithium hexafluorophosphate), LiBF₄ (lithium tetrafluoroborate), LiClO₄ (lithium perchlorate), LiAsF₆ (lithium hexafluoroborate), LiFSI (lithium bis(fluorosulfonyl)imide), LiTFSI (lithium bis-trifluoromethanesulfonimide), LiTFS (lithium trifluoromethanesulfonat), LiDFOB (lithium difluorooxalatoborate), LiBOB (lithium bisoxalatoborate), LiPO₂F₂ (lithium difluorophosphate), LiDFOP (lithium difluorophosphate), and LiTFOP (lithium tetrafluoro oxalate phosphate).

In some embodiments, a concentration of the electrolyte salt in the non-aqueous electrolyte is, for example, above 0.3 mol/L (mol/L), optionally above 0.7 mol/L, optionally below 1.7 mol/L, and further optionally below 1.2 mol/L.

In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), tetramethylene sulfone (SF), methyl sulfone (MSM), ethyl methanesulfonate (EMS), and diethyl sulfone (ESE).

In some embodiments, the electrolyte solution further optionally includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature performance of the battery.

### [Outer package]

In some embodiments, the secondary battery may include an outer package for packaging the positive electrode plate, the negative electrode plate, a separator, and an electrolyte. In an example, the positive electrode plate, the negative electrode plate, and the separator may be laminated or wound to form a battery cell of a laminated structure or a battery cell of a wound structure, and the battery cell is packaged in an outer package. The electrolyte may be an electrolyte solution, and the electrolyte solution infiltrates into the battery cell. There may be one or more battery cells in the secondary battery, and the quantity can be adjusted based on needs.

In some embodiments, the outer package of the secondary battery may alternatively be soft package, for example, a soft bag. A material of the soft package may be plastic, for example, may include one or more of polypropylene PP, polybutylene terephthalate PBT, polybutylene succinate PBS, and the like. Alternatively, the outer package of the secondary battery may be a hard shell, for example, an aluminum shell.

In some embodiments, the positive electrode plate, the negative electrode plate, and the separator may be made into an electrode assembly through winding or lamination.

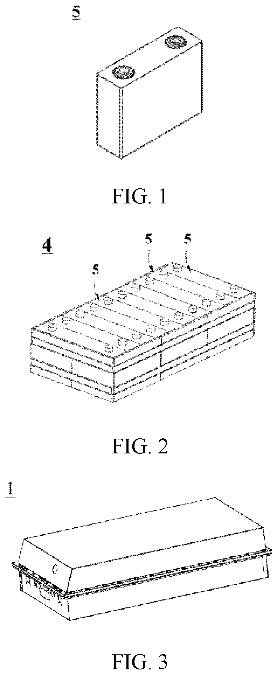

This application does not impose a special limitation on a shape of the secondary battery, and the lithium-ion battery may be cylinder-shaped, prism-shaped, or in any other shape. FIG. 1 shows a rectangular secondary battery 5 as an example.

### [Battery module, battery pack, and electric apparatus]

A fourth aspect of this application provides a battery module, including the secondary battery according to the third aspect of this application.

In some embodiments, the secondary battery provided in this application can be assembled into a battery module. The battery module may include a plurality of secondary batteries and a specific quantity may be adjusted based on application and capacity of the battery module.

FIG. 2 shows a battery module 4 as an example. Referring to FIG. 2, in the battery module 4, a plurality of secondary batteries 5 may be sequentially arranged in a length direction of the battery module 4. Certainly, the plurality of secondary batteries may also be arranged in any other manner. Further, the plurality of secondary batteries 5 may be fastened through a fastener.

Optionally, the battery module 4 may further include a housing with accommodating space, and the plurality of secondary batteries 5 are accommodated in the accommodating space.

A fifth aspect of this application provides a battery pack, including at least one of the secondary battery in the third aspect of this application or the battery module in the fourth aspect of this application.

In some embodiments, the battery module obtained by assembling the secondary batteries may be further assembled into a battery pack, and a quantity of battery modules in the battery pack may be adjusted based on application and a capacity of the battery pack.

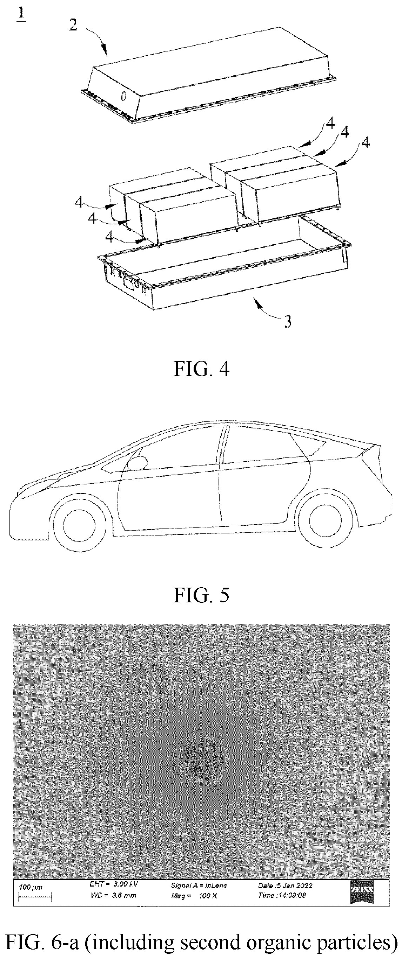

FIG. 3 and FIG. 4 show a battery pack 1 as an example. Referring to FIG. 3 and FIG. 4, the battery pack 1 may include a battery box and a plurality of battery modules 4 disposed in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

A sixth aspect of this application provides an electric apparatus, including at least one of the secondary battery provided in the third aspect of this application, the battery module provided in the fourth aspect of this application, or the battery pack provided in the fifth aspect of this application, which serves as a power supply for the electric apparatus. The electric apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

The secondary battery, the battery module, or the battery pack may be selected for the electric apparatus based on requirements for using the apparatus.

FIG. 5 shows an electric apparatus as an example. The electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the electric apparatus may be a mobile phone, a tablet computer, a notebook computer, or the like. The electric apparatus is usually required to be light and thin, and the secondary battery may be used as a power supply.

### Examples

The following describes examples of this application. The examples described below are exemplary and only used to explain this application, but cannot be construed as a limitation to this application. For an example indicating no specific technique or condition, the technique or condition described in the paper in the art or the product specification prevails. The reagents or instruments used herein are all commercially available conventional products if no manufacturer is indicated.

### Example 1

### Preparation of first organic particles (P1)

At room temperature, required monomers were stirred and mixed uniformly in weight percentages of 25wt% 2-hydroxyethyl acrylate, 20wt% n-butyl acrylate, 5wt% methyl methacrylate, 5wt% trimethylolpropane triacrylate, 20wt% acrylonitrile, and 25wt% acrylamide. 2 kg of mixed monomers, 60g of emulsifier of sodium lauryl sulfate, 20g of initiator of ammonium persulfate, and 2.40 kg of deionized water were added into a 10L four-necked flask equipped with a mechanical stirring device, a thermometer, and a condenser. A resulting mixture was stirred and emulsified at 1600 rpm for 30 minutes. Then temperature was raised to 75°C under protection of nitrogen. After 4 hours of reaction, pH was adjusted to 6.5 with 1wt% NaOH aqueous solution, and the temperature was immediately lowered to below 40°C, to obtain an organic polymer in an emulsion state with a solid proportion of about 45%.

The foregoing organic polymer and silicon dioxide were added to an appropriate amount of deionized water in a dry weight ratio of 9:1, and a resulting mixture was stirred for 1 hour to mix fully, and then spray-dried to remove the solvent to obtain powder. Then, after grinding and pulverizing, first organic particles with a Dᵥ50 particle size of 8 µm, a particle size distribution of (Dᵥ90-Dᵥ10)/Dᵥ50 of 1.76, DSC glass transition temperature of 60°C, and a weight-average molecular weight of about 600×10³ g/mol were obtained.

### Preparation of pressure-sensitive binder

The pressure-sensitive binder included organic polymers and a plasticizer, where the organic polymers were 30wt% isobutyl acrylate+25wt% isooctyl acrylate+5wt% 2-hydroxypropyl methacrylate+15wt% styrene+22wt% acrylonitrile+3wt% polyvinyl alcohol copolymer, the plasticizer was glycerin, and a grafting ratio was 8wt%. The pressure-sensitive binder can be prepared with reference to Patent Application No. PCT/CN2021/143069.

### Preparation of separator

(1) A polyethylene microporous membrane (purchased from SEMBCORP) with thickness of about 9 µm, a pore diameter of about 50 nm, and porosity of about 38% was used as a substrate of the separator.
(2) 3.3 kg of pressure-sensitive binder (having glass transition temperature of about 10°C and a median particle size by volume Dᵥ50 of about 1.1 µm, and including organic polymers and a plasticizer at a weight ratio of 5:1 (relative to a weight of the plasticizer, about 8wt% plasticizer was grafted on the organic polymer), where the organic polymers were 30wt% isobutyl acrylate+25wt% isooctyl acrylate+5wt% 2-hydroxypropyl methacrylate+15wt% styrene+22wt% acrylonitrile+3wt% polyvinyl alcohol copolymer, and the plasticizer was glycerin) was added to 23.6 kg of deionized water to obtain a first polymer solution.
(3) An appropriate amount of first organic particles (P1, 25wt% 2-hydroxyethyl acrylate+20wt% n-butyl acrylate+5wt% methyl methacrylate+5wt% trimethylolpropane triacrylate+20wt% acrylonitrile+ 25wt% acrylamide, Dᵥ50 particle size was 6 µm, (Dᵥ90-Dᵥ10)/Dᵥ50 was 1.76, glass transition temperature was 60°C, and a weight-average molecular weight was about 600×10³g/mol) and 18g of dispersant (BYK-22136, BAK Chemicals, Serial No. 22136) were added to the first polymer solution obtained in step 2, and mixed fully to form a second polymer solution, where a dry weight ratio of the first organic particles to the pressure-sensitive binder in the second polymer solution was 90:10.
(4) The second polymer solution obtained in step 3 was used as a water-borne coating slurry, and applied onto two surfaces of the substrate of the separator via spin spraying. After drying, samples were taken from 32 positions, and a unit area was sampled at each position to calculate a change in gram weights of the separator at the position before and after spin spraying to obtain an average, and therefore, surface density ρ of the separator coating was 0.97 g/m². The prepared separator included the substrate of the separator and pressure-sensitive coatings applied onto two surfaces of the substrate of the separator, the pressure-sensitive coating had thickness of about 3 µm, and included the first organic particles and the pressure-sensitive binder at a dry weight ratio of 90:10, and the pressure-sensitive binder included the organic polymer and the plasticizer at a weight ratio of 5:1 (relative to a weight of the plasticizer, about 8wt% plasticizer was grafted on the organic polymer).

### Preparation of secondary battery

An active material LiNi_{1/3}Mn_{1/3}Co_{1/3}O₂, a conductive agent acetylene black, and a binder polyvinylidene fluoride (PVDF, a weight-average molecular weight: 1.2×10⁶ g/mol) were fully stirred and uniformly mixed in a solvent N-methylpyrrolidone at a weight ratio of 94:3:3, to obtain a positive electrode slurry, and the slurry was applied onto aluminum (Al) foil, and subjected to drying and cold pressing to obtain a positive electrode plate. A loading amount of the positive electrode active material on the positive electrode plate 0.32 g/1540.25 mm², and density was 3.45 g/cm³.

An active material artificial graphite, a conductive agent acetylene black, a binder styrene-butadiene rubber (SBR), and a thickener sodium carboxymethyl cellulose (CMC) were fully stirred and uniformly mixed in a solvent deionized water at a weight ratio of 95:2:2:1, obtain a negative electrode slurry, and then the slurry was applied onto copper (Cu) foil, and subjected to drying and cold pressing to obtain a negative electrode plate. A loading amount of graphite on the negative electrode plate was 0.18 g/1540.25 mm², and density was 1.65 g/cm³.

Ethylene carbonate (EC), ethyl methyl carbonate (EMC), and diethyl carbonate (DEC) were mixed in a volume ratio of 3:5:2, and then LiPF₆ was evenly dissolved in such solution, to obtain the electrolyte. In the electrolyte, a concentration of LiPF₆ was 1 mol/L.

The separator prepared in each example or comparative example was used as a separator for the secondary battery.

The positive electrode plate, the separator, and the negative electrode plate were stacked in order, so that the separator was sandwiched between positive and negative electrodes for isolation, and winding was performed to obtain a jelly roll. The jelly roll was placed into an outer package, the electrolyte solution was injected and packaged, so that a secondary battery was obtained. It should be noted that if the coating of the separator was single-sided, a coated surface faced a cathode (that is, the positive electrode plate) side.

### Test method

### 1. Test of median particle size by volume

The test was conducted with reference to Standard GB/T 19077-2016/ISO 13320:2009 Particle Size Distribution Laser Diffraction Method. A laser particle size analyzer (Malvern 3000, MasterSizer 3000) was used for testing, and a helium-neon red light source was used a main light source. A small clean beaker was taken, 1g of a to-be-tested sample was added, a drop of surfactant was added to promote dispersion of the sample, 20 mL of deionized water (a sample concentration satisfied that a shading degree was 8% to 12%) was added, and a resulting mixture was subjected to ultrasonic processing at 53 kHz/120 W for 5 minutes to ensure that a sample was completely dispersed. After the laser particle size analyzer was turned on and an optical path system was cleaned, a background was automatically tested. The to-be-tested solution that had been subjected to ultrasonic processing was stirred for uniform dispersion, and put into a sample cell as required, to start measuring a particle size. A measurement result could be read from the instrument.

### 2. Glass transition temperature

The glass transition temperature could be measured in a method commonly used in the art. For example, the glass transition temperature could be measured through differential scanning calorimetry with reference to GB/T 19466.2. Heating rate was 10 °C/min, and an air atmosphere was used.

### 3. Grafting ratio test of plasticizer in pressure-sensitive binder

The grafting ratio could be tested via infrared testing. Details were as follows: The organic polymer, the plasticizer, and the pressure-sensitive binder were tested to obtain Fourier transform infrared spectra thereof, where a peak different from those of the organic polymer and the individual plasticizer occurred at a location of the pressure-sensitive binder at 1500 cm⁻¹ to 1700 cm⁻¹, the peak represented the grafted plasticizer, and an area under the peak represented an amount of grafted plasticizer; and based on this, the grafting ratio of the grafted plasticizer was calculated (representing a ratio of a peak area corresponding to a characteristic peak of the grafted plasticizer to a peak area of the plasticizer (100%)).

### 4. Evaluation of adhesion performance of separator

A test process was as follows:
1. The prepared separator with length of 300 mm and width of 100 mm and the foregoing prepared positive and negative electrode plates were selected.
2. A top and bottom of the separator were wrapped with paper, and the separator was punched into a 54.2 mm×72.5 mm sample via a cutting die and a punching machine.
3. The die-cut separator sample and the positive or negative electrode plates were neatly stacked, the separator should face upward (the coating faced the positive electrode plate during one-sided coating), 130 mm×130 mm teflon (teflon) pads were put on the top and bottom, the stacked sample was put in the middle of 200 mm×200 mm cardboards, and additionally covered with a 150 mm×160 mm cardboard.
4. The stacked sample was put into a flat press machine, pressure was adjusted, air pressure was adjusted, the pressure of the flat press machine was 350 kg±10 kg (a touched area was about 54.2 mm×72.5 mm, and calculated actual pressure was about 0.87 MPa), temperature was set to 25°C, and time was set to 15s, to perform pressing.
5. The hot-pressed sample was punched into a 72.5 mm×15 mm strip via the cutting die and the punching machine.
6. One surface of the electrode plate was fixed on a steel plate with a double-sided tape, and another surface was adhered to the separator. The double-sided tape was used to bind an A4 paper strip with width of 15 mm to the separator to complete preparation of a test sample.
7. A Gotech tensile machine was turned on, and parameters were set in sequence: an adhesion force test, a speed of 50 mm/min, and initial fixture spacing of 40 mm.
8. The test sample was put between the fixture, an end of the steel plate was fixed on a lower clamp, and the A4 paper was fixed on an upper clamp. The upper and lower clamps were respectively fixed with fixtures.
9. An operation interface of stretching on a computer desktop was clicked on, a force, displacement, and the like were reset to zero, and then "Start" was clicked on to pre-stretch about 5 mm; and after pre-stretching, the force, displacement, and the like were reset to zero, and the test was started. During the test, the steel plate for fixing the electrode plate was fixed, and the tensile machine pulled up the A4 paper strip to separate the separator from the electrode plate. After the test, complete data were extracted and saved.
10. At least 5 test samples in each group were tested, curve repeatability of adhesion force tests of the 5 test samples was good, and then a next group of tests was started. Otherwise, the test samples needed to be tested again until the repeatability of the 5 test samples was good.
11. After the test was completed, an adhesion strength (N/m)-displacement curve was drawn, an average of 100th to 300th data points was used as the adhesion force, and the measured adhesion force was denoted as F0.
12. Steps 1 to 11 were repeated, where in step 4, pressure was changed to 850 kg±10 kg (calculated actual pressure was equivalent to about 2.24 MPa), and the temperature T was changed to 25°C. An obtained adhesion force was denoted as F1.
13. Steps 1 to 11 were repeated, where in step 4, pressure was changed to 850 kg±10 kg (calculated actual pressure was equivalent to about 2.24 MPa), and the temperature T was changed to 95°C. An obtained adhesion force was denoted as F2.

### 5. Evaluation of resistance performance of separator

A test process was as follows:
(1) Preparation of separator: Each to-be-tested separator was cut into samples of the same size (45.3 mm*33.7 mm), and the samples were put in an environment at 60°C for drying for at least 4 hours, and then quickly transferred to a Class 100 clean glove box at 25°C for later use.
(2) Preparation of pocket bag of confined symmetric cell (aluminum-plastic bag of the confined symmetric cell (aluminum-plastic bag was a general commodity made of polypropylene and aluminum foil used for a pouch cell)): A blank symmetrical cell assembled by using Cu foil versus Cu foil (copper foil vs. copper foil) as current collectors was used. Confinement of the pocket bag was implemented by punching holes in the middle of a green glue. Before use, the pocket bag needed to be put in the environment at 60°C for drying for at least 4 hours, and then quickly transferred to the Class 100 clean glove box at 25°C in step (1) for later use.
(3) Assembling of symmetric cell: By using the negative electrode plate as the electrode, 5 groups of symmetric cell samples with different quantities of separator layers (1 layer, 2 layers, 3 layers, 4 layers, and 5 layers) were assembled in situ in the foregoing glove box in step (1), and each group of samples included 5 parallel samples; and a simple sealing machine was used to seal a side of the pocket bag, a liquid (300 µL) was injected with a pipette (electrolyte solution, having the same composition as an electrolyte solution of the battery), and a bottom was sealed.
(4) Fixing of fixture onto assembled symmetric cell: The assembled symmetric cell was left standing in the foregoing glove box in step (1) overnight, so that the electrolyte solution fully infiltrated the separator; and the next day, a metal fixture was fixed, and pressure of the fixture was set to 0.7 MPa.
(5) Test of electrochemical impedance spectroscopy (EIS):
   Before the test, the symmetric cells with different quantities of separator layers were put in a high and low temperature box at constant temperature of 25°C for half an hour, and EIS at the set temperature (25°C) was tested (if at low temperature (for example, -25°C-0°C), time of maintaining the constant temperature could be correspondingly extended to, for example, about two hours).
(6) Bio-Logic VMP3 electrochemical workstation made in France was used, a voltage was less than 5 V, a current was less than 400 mA, and current accuracy was 0.1%*100 µA. During the test, test conditions of the EIS were set: A voltage frequency was 1 MHz to 1 kHz, a disturbance voltage was set to 5 MV, and the pressure of the fixture was set to 0.7 MPa.
(7) A scatter diagram was made by using a real part of EIS data versus a negative imaginary part. In addition, data of parallel samples with different quantities of layers and the same quantities of layers was drawn on one figure, and an EIS diagram obtained in this way was used for comparison with original EIS data.
(8) A point that is not present in the first quadrant in the EIS diagram obtained in foregoing step (7) was eliminated, to obtain a new EIS diagram. Linear fitting was performed on a scatter point in the first quadrant in the new EIS diagram to obtain a correlation formula. Assuming y=0, a value x could be obtained, that is, a resistance of the required separator in the electrolyte solution. By analogy, the measured EIS data could be subjected to linear fitting to obtain a resistance between parallel samples with different quantities of layers. Parallel samples of five resistances were selected and denoted as R.

### 6. Performance evaluation of secondary battery

### Cycling performance test:

Five secondary batteries were taken from each group of prepared secondary batteries, the secondary batteries were repeatedly charged and discharged through the following steps, and cycling capacity retention rates of the secondary batteries at 25°C or 45°C were calculated.

First charging and discharging was performed in a 25°C environment, and constant-current and constant-voltage charging was performed at a charge current of 0.7C (that is, a current that discharges a theoretical capacity completely within 2 hours) until an upper-limit voltage was 4.4 V, constant-current discharging was performed at a discharge current of 0.5C until a final voltage was 3 V, and a discharge capacity was recorded at the first cycle. Then, 1000 charging and discharging cycles were performed, and the discharge capacity at the 1000th cycle was recorded. Cycling capacity retention rate=(discharge capacity of the 1000th cycle/discharge capacity of the 1st cycle)×100%.

First charging and discharging was performed in a 45°C environment, and constant-current and constant-voltage charging was performed at a charge current of 0.7C (that is, a current that discharges a theoretical capacity completely within 2 hours) until an upper-limit voltage was 4.4 V, constant-current discharging was performed at a discharge current of 0.5C until a final voltage was 3 V, and a discharge capacity was recorded at the first cycle. Then, 1000 charging and discharging cycles were performed, and the discharge capacity at the 1000^{th} cycle was recorded. Cycling capacity retention rate=(discharge capacity of the 1000^{th} cycle/discharge capacity of the 1^{st} cycle)×100%.

### Examples 2 and 3

The examples were the same as Example 1 except that ratios of (Dᵥ90-Dᵥ10)/Dᵥ50 of first organic particles in separator coatings were different. Details were as follows:
(Dᵥ90-Dᵥ10)/Dᵥ50 of first organic particles in a separator prepared in Example 2 was 2.
(Dᵥ90-Dᵥ10)/Dᵥ50 of first organic particles in a separator prepared in Example 3 was 2.5.

### Comparative Example 1

The comparative example was the same as Example 1 except that (Dᵥ90-Dᵥ10)/Dᵥ50 of first organic particles in a separator coating was 3.5.

### Examples 4 to 8

The examples were the same as Example 1 except that used first organic particles were different, and glass transition temperature was different. Specifically, the glass transition temperature of the first organic particles used in Examples 4 to 8 was 20°C, 30°C, 40°C, 80°C, and 100°C respectively.

### Comparative Examples 2 and 3

The comparative examples were the same as Example 1 except that first organic particles P5 and P11 having glass transition temperature of 10°C and 110°C respectively were used.

### Examples 9 to 13

The examples were the same as Example 1 except that surface density p/R of separator coatings was 0.52 gm⁻²Ω⁻¹, 0.65 gm⁻²Ω⁻¹, 0.83 gm⁻²Ω⁻¹, 0.96 gm⁻²Ω⁻¹, and 0.98 gm⁻²Ω⁻¹ respectively.

### Comparative Examples 4 to 6

The comparative examples were the same as Example 1 except that surface density p/R of separator coatings was 0.26 gm⁻²Ω⁻¹, 0.29 gm⁻²Ω⁻¹, and 0.41 gm⁻²Ω⁻¹ respectively.

### Examples 14 and 15

The examples were the same as Example 1 except that used first organic particles were P12 and P13 respectively.

### Example 16

### Preparation of separator

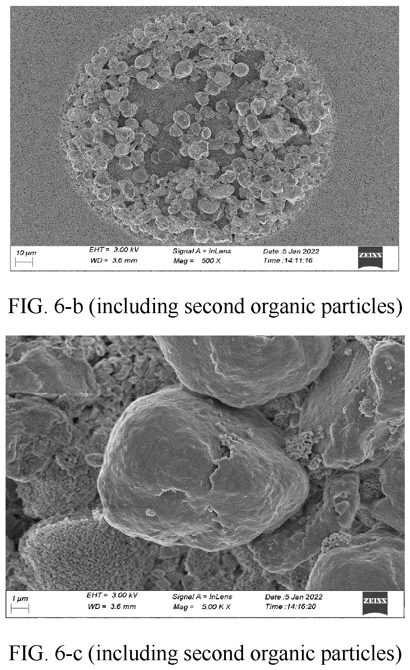

(1) A polyethylene microporous membrane (purchased from SEMBCORP) with thickness of about 9 µm, a pore diameter of about 50 nm, and porosity of about 38% was used as a substrate of the separator.
(2) 21 kg of the first organic particles P1 were added into 140 kg of deionized water, and mixed uniformly, to form a first polymer solution.
(3) An aqueous emulsion of 23.5 kg of pressure-sensitive binder (having glass transition temperature of about 10°C and a median particle size by volume Dᵥ50 of about 1.1 µm, and including organic polymers and a plasticizer at a weight ratio of 5:1, where relative to a weight of the plasticizer, about 8wt% plasticizer was grafted on the organic polymer, where the organic polymers were 30wt% isobutyl acrylate+25wt% isooctyl acrylate+5wt% 2-hydroxypropyl methacrylate+15wt% styrene+22wt% acrylonitrile+3wt% polyvinyl alcohol copolymer, and the plasticizer was glycerin) was added to the first polymer solution obtained in step (2) and mixed uniformly, to obtain a second polymer solution.
(4) An appropriate amount of second organic particles (polyvinylidene fluoride, a weight-average molecular weight: 5×10⁵ g/mol) were added to the second polymer solution obtained in step (3), and in this way, the first organic particles and the second organic particles were at a dry weight ratio of 90:10, and mixed uniformly to obtain a third polymer solution, where a dry weight ratio of all the organic particles (including the first organic particles and the second organic particles at a dry weight ratio of 90:10) to the pressure-sensitive binder was 85:15.
(5) The third polymer solution obtained in step (4) was used as a water-borne coating slurry, and applied onto one surface of the substrate of the separator via spin spraying. After drying, the separator was obtained. The prepared separator included the substrate of the separator and a coating applied onto one surface of the substrate of the separator, the coating had thickness of about 3 µm, and included organic particles at a dry weight ratio of 85:15 (including the first organic particles and the second organic particles at a dry weight ratio of 90:10) and the pressure-sensitive binder, and the pressure-sensitive binder included the organic polymer and the plasticizer at a weight ratio of 5:1 (relative to a weight of the plasticizer, about 8wt% plasticizer was grafted on the organic polymer). Coating surface density of the coating was 0.97 g/m². FIG. 6 shows topography of a coating of a prepared separator in an embodiment.

### Examples 17 to 19

The examples were the same as Example 16 except that dry weight ratios of first organic particles to second organic particles in coatings were 70:30, 50:50, and 40:60.

### Comparative Example 7

The comparative example was the same as Example 16 except that first organic particles were not used.

Compositions of the first organic particles used in the examples and comparative examples are shown in Table 1 below.

Adhesion performance and resistance of the separators prepared in the foregoing Examples 1 to 19 and Comparative Examples 1 to 7 and cycling performance of the secondary battery prepared with the separators were evaluated, and results are shown in Table 2 below.

**Table 1 Compositions and properties of the first organic particles used in Examples 1 to 19 and Comparative Examples 1 to 7**

| No. of first organic particles | Monomer | | | Specific structure | | Inorganic substance | | Particle size | Glass transition temperature T (g/°C) |
|---|---|---|---|---|---|---|---|---|---|
| | Monomer 1 | Monomer 2 | Monomer 3 | Composition | Percentage of component (%) | Type | Percentage of component (%) | (D90-D10) /D50 | |
| P1 | 55 | 20 | 25 | 25wt% 2-hydroxyethyl acrylate+20wt% n-butyl acrylate+5wt% methyl methacrylate+5wt% trimethylolpropane triacrylate+20wt% acrylonitrile+ 25wt% acrylamide | 90 | Silicon dioxide | 10 | 1.76 | 60 |
| P2 | 55 | 20 | 25 | 25wt% 2-hydroxyethyl acrylate+20wt% n-butyl acrylate+5wt% methyl methacrylate+5wt% trimethylolpropane triacrylate+20wt% acrylonitrile+ 25wt% acrylamide | 90 | Silicon dioxide | 10 | 0.2 | 60 |
| P3 | 55 | 20 | 25 | 25wt% 2-hydroxyethyl acrylate+20wt% n-butyl acrylate+5wt% methyl methacrylate+5wt% trimethylolpropane triacrylate+20wt% acrylonitrile+ 25wt% acrylamide | 90 | Silicon dioxide | 10 | 2.5 | 60 |
| P4 | 55 | 20 | 25 | 25wt% 2-hydroxyethyl acrylate+20wt% n-butyl acrylate+5wt% methyl methacrylate+5wt% trimethylolpropane triacrylate+20wt% acrylonitrile+ 25wt% acrylamide | 90 | Silicon dioxide | 10 | 3.5 | 60 |
| P5 | 75 | 20 | 5 | 25wt% 2-hydroxyethyl acrylate+40wt% n-butyl acrylate+5wt% methyl methacrylate+5wt% trimethylolpropane triacrylate+20wt% acrylonitrile+5wt% acrylamide | 90 | Silicon dioxide | 10 | 1.76 | 10 |
| P6 | 70 | 20 | 10 | 25wt% 2-hydroxyethyl acrylate+35wt% n-butyl acrylate+5wt% methyl methacrylate+10wt% trimethylolpropane triacrylate+20wt% acrylonitrile+5wt% acrylamide | 90 | Silicon dioxide | 10 | 1.76 | 20 |
| P7 | 65 | 20 | 15 | 25wt% 2-hydroxyethyl acrylate+30wt% n-butyl acrylate+5wt% methyl methacrylate+5wt% trimethylolpropane triacrylate+20wt% acrylonitrile+15wt% acrylamide | 90 | Silicon dioxide | 10 | 1.76 | 30 |
| P8 | 65 | 10 | 25 | 35wt% 2-hydroxyethyl acrylate+20wt% n-butyl acrylate+5wt% methyl methacrylate+5wt% trimethylolpropane triacrylate+10wt% acrylonitrile+ 25wt% acrylamide | 90 | Silicon dioxide | 10 | 1.76 | 40 |
| P9 | 40 | 25 | 35 | 15wt% 2-hydroxyethyl acrylate+15wt% n-butyl acrylate+5wt% methyl methacrylate+5wt% trimethylolpropane triacrylate+25wt% acrylonitrile+ 35wt% acrylamide | 90 | Silicon dioxide | 10 | 1.76 | 80 |
| P10 | 45 | 20 | 35 | 10wt% 2-hydroxyethyl acrylate+5wt% n-butyl acrylate+25wt% methyl methacrylate+5wt% trimethylolpropane triacrylate+20wt% acrylonitrile+ 35wt% acrylamide | 90 | Silicon dioxide | 10 | 1.76 | 100 |
| P11 | 40 | 25 | 35 | 5wt% 2-hydroxyethyl acrylate+5wt% n-butyl acrylate+25wt% methyl methacrylate+5wt% trimethylolpropane triacrylate+25wt% acrylonitrile+ 35wt% acrylamide | 90 | Silicon dioxide | 10 | 1.76 | 110 |
| P12 | 55 | 20 | 25 | 25wt% 2-ethylhexyl methacrylate+20wt% lauryl methacrylate+5wt% methyl methacrylate+5wt% trimethylolpropane triacrylate+20wt% acrylonitrile+ 25wt% acrylamide | 90 | Silicon dioxide | 10 | 1.76 | 60 |
| P13 | 55 | 20 | 25 | 25wt% 2-ethylhexyl methacrylate+20wt% lauryl methacrylate+5wt% methyl methacrylate+5wt% trimethylolpropane triacrylate+20wt% acrylonitrile+ 25wt% methylol acrylamide | 90 | Silicon dioxide | 10 | 1.76 | 60 |

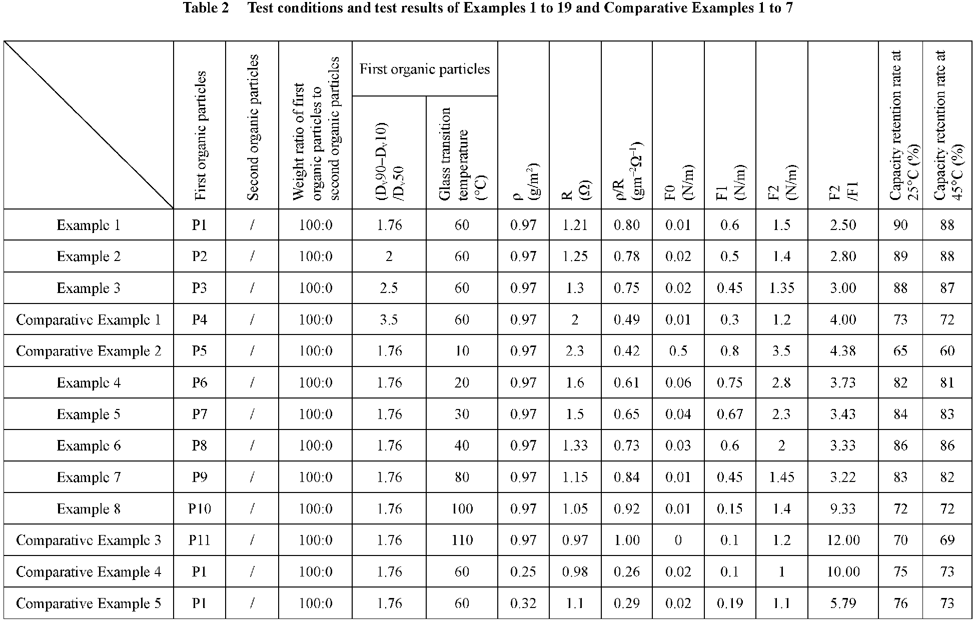

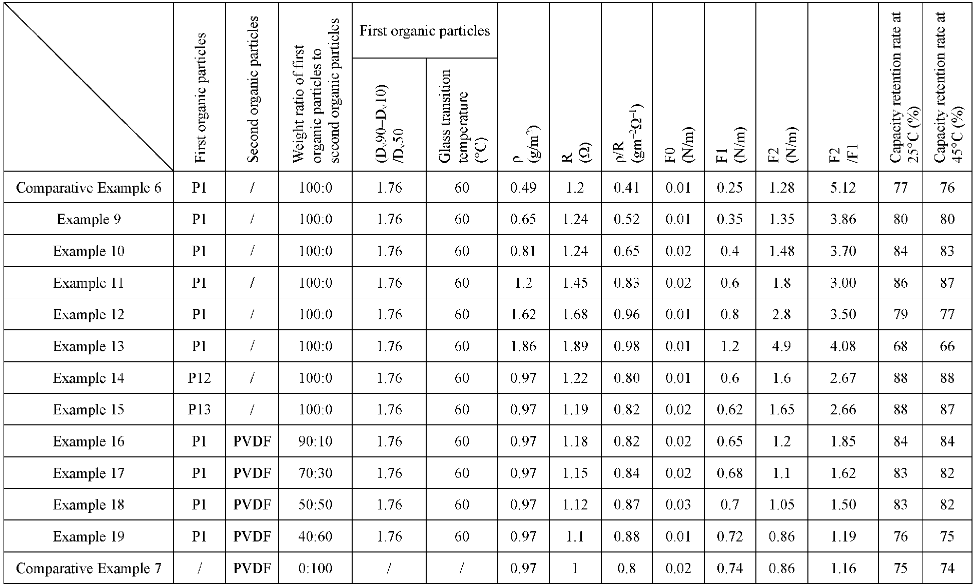

It can be seen from the results in the foregoing Tables 1 and 2 that during preparation of the separator, when the pressure-sensitive binder prepared with the organic polymer and plasticizer was used together with the organic particles, the separator could be effectively endowed with high adhesion performance and an ionic conductivity capability at room temperature. Specifically, at room temperature, resistances of the prepared separators were all below 1.89 Q. At room temperature under 2 MPa or above, adhesion forces for the positive electrode were all above 0.15 N/m, especially above 0.4 N/m, and under 1 MPa or below, adhesion forces for the electrode were all below 0.08 N/m. Therefore, the prepared separator could avoid excessive adhesion between the layers of the separators during winding and storage, and when the separator was used to prepare the battery cell, the electrode plate and the separator could be attached tightly at room temperature. On the one hand, scrapping of the battery cell, impact on the battery cell performance, and a safety hazard that are caused due to misalignment between the electrode plate and the separator could be avoided. On the other hand, a tunnel furnace and a second recombination process in a conventional production process of the battery cell could be omitted, which could further save production space and production time, reduce energy consumption, significantly increase production capacity of the battery cell, and also improve shaping performance, safety performance and kinetic performance of the battery cell. In addition, adhesion forces F1 and F2 of the separator in this application at room temperature and high temperature were better matched.

### Examples 20 and 21

The examples were the same as Example 16 except that weight ratios of the organic particles (including first organic particles and second organic particles) to pressure-sensitive binders in coatings, and dry weight ratios of the first organic particles to the second organic particles were different. Details were as follows:

A dry weight ratio of organic particles to a pressure-sensitive binder in a coating of a separator prepared in Example 20 was 85:15, where a dry weight ratio of first organic particles to second organic particles in the organic particles was 75:10.

A dry weight ratio of organic particles to a pressure-sensitive binder in a pressure-sensitive coating of a separator prepared in Example 21 was 90:10, where a dry weight ratio of first organic particles to second organic particles in the organic particles was 65:25.

Test results of Examples 20 and 21 are shown in Table 3.

**Table 3 Test conditions and test results of Examples 20 to 21**

| | First organic particles | Second organic particles | Weight ratio of first organic particles to second organic particles | (First organic particles + second organic particles)/ pressure-sensitive binder | ρ (g/m²) | R (Ω) | ρ/R (gm⁻²Ω⁻¹) | F1 (N/m) | F2 (N/m) | F2 /F1 | Capacity retention rate at 25°C (%) | Capacity retention rate at 45°C (%) |
|---|---|---|---|---|---|---|---|---|---|---|---|---|
| Example 20 | P1 | PVDF | 75:10 | 85:15 | 0.97 | 1.26 | 0.77 | 0.7 | 1.27 | 1.81 | 80 | 81 |
| Example 21 | P1 | PVDF | 65:25 | 90:10 | 0.97 | 1.12 | 0.87 | 0.69 | 1.12 | 1.62 | 82 | 82 |

It can be seen from Table 3 that by adjusting a weight ratio of the first organic particles, the second organic particles, and the pressure-sensitive binder, the resistance of the separator could be further reduced and significant deterioration of the cycling performance of the secondary battery could also be avoided.

### Examples 22 to 24

The examples were the same as Example 1 except that grafting ratios of plasticizers in used pressure-sensitive binders were different. Details were as follows:
A grafting ratio of a plasticizer in a pressure-sensitive binder used in Example 22 was 5wt%.
A grafting ratio of a plasticizer in a pressure-sensitive binder used in Example 23 was 3wt%.
A grafting ratio of a plasticizer in a pressure-sensitive binder used in Example 24 was 0wt%, that is, the plasticizer was not grafted.

Test results of Examples 22 to 24 are shown in Table 4.

**Table 4 Test conditions and test results of Example 1 and Examples 22 to 24**

| | Grafting ratio of plasticize r | ρ (g/m²) | R (Ω) | ρ/R (gm-²Ω⁻¹) | F1 (N/m ) | F2 (N/m ) | F2 /F1 | Capacit y retentio n rate at 25°C (%) | Capacity retention rate at 45°C (%) |
|---|---|---|---|---|---|---|---|---|---|
| Exampl e 1 | 8wt% | 0.97 | 1.2 1 | 0.80 | 0.6 | 1.5 | 2.5 0 | 90 | 88 |
| Exampl e 22 | 5wt% | 0.97 | 1.3 5 | 0.72 | 0.4 | 1.2 | 3.0 0 | 90 | 88 |
| Exampl e 23 | 3wt% | 0.97 | 1.5 4 | 0.63 | 0.3 | 1 | 3.3 3 | 74 | 72 |
| Exampl e 24 | 0wt% | 0.97 | 1.8 | 0.54 | 0.2 | 0.5 | 2.5 0 | 69 | 67 |

It can be seen from Table 4 that by adjusting the grafting ratio of the plasticizer, the resistance of the separator could be further reduced, and the adhesion performance of the separator and the cycling performance of the corresponding battery could be improved.

### Examples 25 to 29

The examples were the same as Example 1 except that particle sizes of first organic particles were different, and thickness of coatings was different. Details were as follows:
Dᵥ50 particle size of first organic particles used in Example 25 was about 3 µm, and thickness of a coating was about 0.8 µm.
Dᵥ50 particle size of first organic particles used in Example 26 was about 5 µm, and thickness of a coating was about 2 µm.
Dᵥ50 particle size of first organic particles used in Example 27 was about 20 µm, and thickness of a coating was about 15 µm.
Dᵥ50 particle size of first organic particles used in Example 28 was about 30 µm, and thickness of a coating was about 20 µm.
Dᵥ50 particle size of first organic particles used in Example 29 was about 36 µm, and thickness of a coating was about 22 µm.

### Examples 30 to 36

The examples were the same as Example 1 except that particle sizes of pressure-sensitive binders were different. Details were as follows:
Dᵥ50 particle size of a pressure-sensitive binder used in Example 30 was about 0.3 µm.
Dᵥ50 particle size of a pressure-sensitive binder used in Example 31 was about 0.5 µm.
Dᵥ50 particle size of a pressure-sensitive binder used in Example 32 was about 0.8 µm.
Dᵥ50 particle size of a pressure-sensitive binder used in Example 33 was about 1.0 µm.
Dᵥ50 particle size of a pressure-sensitive binder used in Example 34 was about 2.0 µm.
Dᵥ50 particle size of a pressure-sensitive binder used in Example 35 was about 3.0 µm.
Dᵥ50 particle size of a pressure-sensitive binder used in Example 36 was about 3.5 µm.

### Examples 37 to 40

The examples were the same as Example 20 except that particle sizes of used second organic particles were different, and thickness of prepared coatings was different. Details were as follows:
Dᵥ50 particle size of second organic particles used in Example 37 was about 2 µm, and thickness of a coating was about 3 µm.
Dᵥ50 particle size of second organic particles used in Example 38 was about 8 µm, and thickness of a coating was about 4 µm.
Dᵥ50 particle size of second organic particles used in Example 39 was about 10 µm, and thickness of a coating was about 6 µm.
Dᵥ50 particle size of second organic particles used in Example 40 was about 12 µm, and thickness of a coating was about 10 µm.

Test results of Examples 25 to 40 are shown in Table 5.

**Table 5 Test conditions and test results of Examples 25 to 40**

| | Dᵥ50 particle size of first organic particles (µm) | Dᵥ50 particle size of second organic particles (µm) | Dᵥ50 particle size of a pressure-sensitive binder (µm) | Thickness of doublesided coatings (µm) | ρ (g/m²) | R (Ω) | **p/R** (gm⁻²Ω⁻¹) | F1 (N/m) | F2 (N/m) | F2 /F1 | Capacity retention rate at 25°C (%) | Capacity retention rate at 45°C (%) |
|---|---|---|---|---|---|---|---|---|---|---|---|---|
| Example 25 | 3 | 10 | 1.1 | 0.8 | 0.97 | 1.56 | 0.62 | 0.45 | 1.30 | 2.9 | 75 | 70 |
| Example 26 | 5 | 10 | 1.1 | 2 | 0.97 | 1.28 | 0.76 | 0.5 | 1.35 | 2.7 | 82 | 84 |
| Example 27 | 20 | 10 | 1.1 | 15 | 0.97 | 1.40 | 0.69 | 0.3 | 1.20 | 4.0 | 80 | 80 |
| Example 28 | 30 | 10 | 1.1 | 20 | 0.97 | 1.89 | 0.51 | 0.2 | 0.80 | 4.0 | 68 | 65 |
| Example 29 | 36 | 10 | 1.1 | 22 | 0.97 | 1.70 | 0.57 | 0.3 | 0.80 | 2.7 | 70 | 69 |
| Example 30 | 7 | 10 | 0.3 | 6 | 0.97 | 1.50 | 0.65 | 0.2 | 0.50 | 2.5 | 68 | 64 |
| Example 31 | 7 | 10 | 0.5 | 6 | 0.97 | 1.40 | 0.69 | 0.39 | 0.98 | 2.5 | 80 | 80 |
| Example 32 | 7 | 10 | 0.8 | 6 | 0.97 | 1.35 | 0.72 | 0.46 | 1.18 | 2.6 | 88 | 86 |
| Example 33 | 7 | 10 | 1 | 6 | 0.97 | 1.29 | 0.75 | 0.57 | 1.42 | 2.5 | 89 | 87 |
| Example 34 | 7 | 10 | 2 | 6 | 0.97 | 1.15 | 0.84 | 0.4 | 0.60 | 1.5 | 81 | 82 |
| Example 35 | 7 | 10 | 3 | 6 | 0.97 | 1.10 | 0.88 | 0.28 | 0.65 | 2.3 | 70 | 72 |
| Example 36 | 7 | 10 | 3.5 | 6 | 0.97 | 1.00 | 0.97 | 0.1 | 0.45 | 4.5 | 69 | 70 |
| Example 37 | 7 | 2 | 1.1 | 3 | 0.97 | 1.38 | 0.70 | 0.4 | 0.98 | 2.5 | 75 | 74 |
| Example 38 | 7 | 8 | 1.1 | 4 | 0.97 | 1.29 | 0.75 | 0.45 | 1.07 | 2.4 | 82 | 84 |
| Example 39 | 7 | 10 | 1.1 | 6 | 0.97 | 1.12 | 0.87 | 0.67 | 1.45 | 2.2 | 92 | 90 |
| Example 40 | 7 | 12 | 1.1 | 10 | 0.97 | 1.08 | 0.90 | 0.59 | 1.43 | 2.4 | 88 | 87 |

It can be seen from Table 5 that by adjusting Dᵥ50 particle sizes of the first organic particles, the pressure-sensitive binder, and the second organic particles in the coating and the thickness of the coating, the resistance of the separator could be further reduced, and the adhesion performance of the separator and the cycling performance of the corresponding battery could be improved.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A separator, comprising:
a substrate; and
a coating applied on at least one surface of the substrate, wherein the coating comprises 40wt% to 90wt% first organic particles, 2wt% to 15wt% pressure-sensitive binder, and optionally, 0wt% to 50wt% second organic particles;
wherein the first organic particles comprise an organic polymer and an inorganic substance, and the pressure-sensitive binder comprises an organic polymer and a plasticizer;
optionally, a median particle size by volume of the first organic particles satisfies (Dᵥ90-Dᵥ10)/Dᵥ50≤2.5, optionally (Dᵥ90-Dᵥ10)/Dᵥ50≤2, and more optionally (Dᵥ90-Dᵥ10)/Dᵥ50≤1.8, and glass transition temperature of the first organic particles is 20°C to 100°C, optionally 30°C to 80°C; and
optionally, the separator satisfies 0.1 gm⁻²Ω⁻¹≤ρ/R≤1.0 gm⁻²Ω⁻¹, optionally 0.5 gm⁻²Ω⁻¹≤ρ/R≤0.9 gm⁻²Ω⁻¹, and more optionally 0.6 gm⁻²Ω⁻¹≤ρ/R≤0.8 gm⁻²Ω⁻¹, wherein ρ represents surface density of the coating on the substrate, and R represents resistance of the separator at 25°C.

2. The separator according to claim 1, wherein the first organic particles satisfy one or more of the following conditions:
(1) a median particle size by volume Dᵥ50 of the first organic particles is 3 µm to 36 µm, optionally 5 µm to 20 µm;
(2) the glass transition temperature of the first organic particles is 20°C to 100°C, optionally 30°C to 80°C; and
(3) a weight-average molecular weight of the organic polymer in the first organic particles is 500×10³ g/mol to 1000×10³ g/mol, optionally 800×10³ g/mol to 1000×10³ g/mol.

3. The separator according to any one of claims 1 and 2, wherein the organic polymer in the first organic particles is formed by polymerizing at least the following monomers:
a first polymer monomer, wherein the first polymer monomer has at least one ester bond and is optionally one or more of methacrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroethyl methacrylate, glycidyl methacrylate, or trimethylolpropane triacrylate, and more optionally is one or more of methyl methacrylate, lauryl acrylate, lauryl methacrylate, or trimethylolpropane triacrylate;
a second polymer monomer, wherein the second polymer monomer has at least one cyanide bond and is optionally one or more of acrylonitrile, methacrylonitrile, and ethacrylonitrile, and more optionally is one or more of acrylonitrile and methacrylonitrile; and
a third polymer monomer, wherein the third polymer monomer has at least one amide bond and is optionally one or more of acrylamide, N-methylol acrylamide, and N-butoxy methacrylamide, and more optionally is one or more of acrylamide and N-methylol acrylamide; wherein
optionally, a weight ratio of the first polymer monomer, the second polymer monomer, and the third polymer monomer is 1:0-0.8:0.05-0.75, optionally 1:0.1-0.6:0.1-0.6.

4. The separator according to any one of claims 1 to 3, wherein
a percentage of the organic polymer in the first organic particles is 50% to 99.9%, optionally 60% to 99%, and more optionally 70% to 99% based on a total dry weight of the first organic particles; and
a percentage of the inorganic substance in the first organic particles is 0.1% to 50%, optionally 1% to 40%, and more optionally 1% to 30% based on the total dry weight of the first organic particles.

5. The separator according to any one of claims 1 to 4, wherein a weight ratio of the organic polymer to the inorganic substance in the first organic particles is 99:1 to 1:1, optionally 70:30 to 1:1.

6. The separator according to any one of claims 1 to 5, wherein based on a total weight of the organic polymer in the first organic particles,
a percentage of the first polymer monomer is 35wt% to 80wt%, optionally 45wt% to 70wt%;
a percentage of the second polymer monomer is 0wt% to 30wt%, optionally 5wt% to 25wt%; and
a percentage of the third polymer monomer is 5wt% to 40wt%, optionally 8wt% to 35wt%.

7. The separator according to any one of claims 1 to 6, wherein
the inorganic substance in the first organic particles is selected from one or more of an oxide of silicon, aluminum, calcium, zinc, and magnesium, and sodium sulfate, sodium benzoate, calcium carbonate, and a modified material thereof, optionally is one or more of silicon oxide, silica sol, aluminum oxide, zinc oxide, magnesium oxide, and sodium benzoate, and more optionally is one or more of gas-phased silicon dioxide, silicon micropowder, aluminum oxide, and sodium benzoate.

8. The separator according to any one of claims 1 to 7, wherein surfaces of the first organic particles are uneven, and inorganic oxide clusters with a particle size of 10 nm to 200 nm are evenly distributed on the surfaces.

9. The separator according to any one of claims 1 to 8, wherein a weight ratio of the organic polymer to the plasticizer comprised in the pressure-sensitive binder is (4-25):1, optionally (4-11):1.

10. The separator according to any one of claims 1 to 9, wherein the pressure-sensitive binder has a core-shell structure, and both core and shell of the core-shell structure comprise the organic polymer and the plasticizer, wherein in the core, a weight ratio of the organic polymer to the plasticizer is (3-4):1, optionally (3.2-3.8):1, and in the shell structure, a weight ratio of the organic polymer to the plasticizer is (7-9):1, optionally (7.5-8.5):1.

11. The separator according to any one of claims 1 to 10, wherein in the pressure-sensitive binder, a part of the plasticizer is grafted onto the organic polymer; and
optionally, in the pressure-sensitive binder, based on a weight of the plasticizer, at least 5wt% plasticizer is grafted onto the organic polymer.

12. The separator according to any one of claims 1 to 11, wherein a median particle size by volume Dᵥ50 of the pressure-sensitive binder is 0.3 µm to 3.5 µm, optionally 0.8 µm to 2.0 µm; and optionally, glass transition temperature of the pressure-sensitive binder is -50°C to 100°C, optionally -45°C to 60°C.

13. The separator according to any one of claims 1 to 12, wherein in the pressure-sensitive binder, the organic polymer comprises a copolymer formed by copolymerization of a mixture of at least one of the following first monomer group, at least one of the following second monomer group, at least one of the following third monomer group, and at least one of the following reactive dispersants:
a first monomer group, comprising acrylic acid, methacrylic acid, methyl methacrylate, tert-butyl methacrylate, isobornyl methacrylate, methylol acrylamide, acrylamide, styrene, and acrylonitrile;
a second monomer group, comprising C₄-C₂₂ alkyl acrylate such as isobutyl acrylate, isooctyl acrylate, tert-butyl acrylate, 2-ethylhexyl acrylate, cyclohexyl acrylate, ethyl methacrylate, isobutyl methacrylate, 2-ethylhexyl methacrylate, n-hexyl methacrylate, cyclohexyl methacrylate, and benzyl methacrylate, 2-hydroxyethyl acrylate, 2-hydroxypropyl methacrylate, ethyleneurea ethyl methacrylate, dicyclopentenyl ethoxy methacrylate, tetrahydrofuryl methacrylate, trifluoroethyl methacrylate, dimethylaminoethyl methacrylate, diethylaminoethyl methacrylate, propylene methacrylate, and dicyclopentenyl ethoxy methacrylate;
a third monomer group, comprising 2-hydroxyethyl methacrylate, 2-hydroxypropyl methacrylate, glycidyl acrylate, glycidyl methacrylate, dimethylaminoethyl methacrylate, diethylaminoethyl methacrylate, vinyltrimethoxysilane, vinyltriethoxysilane, vinyltriisopropoxysilane, γ-methacryloxypropyltrimethoxysilane, N-methylol acrylamide, N-butoxymethacrylamide, diacetone acrylamide (DAAM), acetoacetate ethyl methacrylate (AAEM), divinylbenzene, epoxy resin with an epoxy value of 0.35 to 0.50, and divinylbenzene; and
reactive dispersants, comprising polyvinyl alcohol, polypropylene alcohol, polypropylene glycol, polyethylene glycol, and polyvinyl acid alcohol.

14. The separator according to any one of claims 1 to 13, wherein the plasticizer is selected from one or more of the following: C₄-C₁₀ alkyl glycerol diether or monoether, C₄-C₁₀ carboxylic acid glycerol monoester or diester, and C₄-C₁₀ alkyl propylene glycol monoether or glycerin.

15. The separator according to any one of claims 1 or 14, wherein average thickness of the coating is 0.8 µm to 22 µm, optionally 2 µm to 15 µm.

16. The separator according to any one of claims 1 to 15, wherein
the second organic particles are a polymer of one or more monomers containing the following groups: halogen, a phenyl group, an epoxy group, a cyano group, an ester group, and an amide group;
optionally, the second organic particles are selected from at least one of the following: a homopolymer or copolymer containing fluorine-containing alkenyl monomer units, a homopolymer or copolymer of alkylene monomer units, a homopolymer or copolymer of unsaturated nitrile monomer units, a homopolymer or copolymer of alkylene oxide monomer units, a dimer, homopolymer, or copolymer of monosaccharide monomer units, and modified compounds of the preceding homopolymers or copolymers;
further optionally, the second organic particles are selected from at least one of the following: polyvinylfluoride, polyvinylidene fluoride, polyvinylidene fluoride-co-hexafluoropropylene, polyvinylidene fluoride-co-trichloroethylene, polystyrene-co-methyl methacrylate, polystyrene-co-butyl acrylate, styrene-butyl acrylate-isooctyl acrylate, polymethyl methacrylate, polyacrylonitrile, polyvinyl acetate, polyethylene-co-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, and cyanoethyl sucrose; and
still further optionally, the second organic particles are selected from at least one of the following: polyvinylidene fluoride-co-hexafluoropropylene, polystyrene-co-butyl acrylate, styrene-butyl acrylate-isooctyl acrylate, polyvinylfluoride, polyvinylidene fluoride, and polyvinylidene fluoride-co-trichloroethylene.

17. The separator according to any one of claims 1 to 16, wherein the second organic particles satisfy one or more of the following conditions:
(1) a median particle size by volume Dᵥ50 of the second organic particles is 2 µm to 20 µm, optionally 6 µm to 15 µm;
(2) a melting point of the second organic particles is 130°C to 160°C, optionally 138°C to 150°C; and
(3) a weight-average molecular weight of the second organic particles is 400×10³ g/mol to 1000×10³ g/mol, optionally 450×10³ g/mol to 650×10³ g/mol.

18. The separator according to any one of claims 1 to 17, wherein the separator satisfies one or more of the following conditions:
(1) porosity of the substrate is 10% to 95%;
(2) a pore diameter of the substrate is 20 nm to 60 nm;
(3) thickness of the substrate is 3 µm to 12 µm, optionally 5 µm to 9 µm; and
(4) the substrate is a film or non-woven fabric selected from one or more of the following: polyethylene, polypropylene, polyethylene terephthalate, polybutylene terephthalate, polyester, polyacetal, polyamide, polycarbonate, polyimide, polyether-ether-ketone, polyaryletherketone, polyetherimide, polyamide-imide, polybenzimidazole, polyethersulfone, polyphenylene oxide, a cycloolefin copolymer, polyphenylene sulfide, and polyvinyl naphthaline.

19. The separator according to any one of claims 1 to 18, wherein in the separator,
a weight ratio of the first organic particles to the second organic particles is 10-100:0-90, optionally 20-90:0-60; and
optionally, a ratio of a total weight of the first organic particles and the second organic particles to a weight of the pressure-sensitive binder is 20-92:8-20, optionally 60-90:10-15.

20. A preparation method of the separator according to any one of claims 1 to 19, comprising the following steps:
(S1) adding first organic particles and a dispersant to a solvent to form a first polymer solution;
(S2) adding a pressure-sensitive binder to the first polymer solution obtained in step S1, and mixing a resulting mixture fully to form a second polymer solution;
(S3) optionally, adding second organic particles to the second polymer solution obtained in step S2, and mixing a resulting mixture fully to form a third polymer solution; and
(S4) applying the second polymer solution obtained in step S2 or the third polymer solution obtained in step S3 onto at least one surface of a substrate, and drying the at least one surface to obtain the separator;
wherein the separator comprises the substrate and a coating applied on at least one surface of the substrate, and the coating comprises 40wt% to 90wt% first organic particles, 2wt% to 15wt% pressure-sensitive binder, and optionally 0wt% to 50wt% second organic particles; wherein the first organic particles comprise an organic polymer and an inorganic substance, and the pressure-sensitive binder comprises an organic polymer and a plasticizer; optionally, a median particle size by volume of the first organic particles satisfies (Dᵥ90-Dᵥ10)/Dᵥ50≤2.5, optionally (Dᵥ90-Dᵥ10)/Dᵥ50≤2, and more optionally (Dᵥ90-Dᵥ10)/Dᵥ50≤1.8, and glass transition temperature of the first organic particles is 20°C to 100°C, optionally 30°C to 80°C; and optionally, the separator satisfies 0.1 gm ²Ω⁻¹≤ρ/R≤1.0 gm⁻²Ω⁻¹, optionally 0.5 gm⁻²Ω⁻¹≤ρ/R≤0.9 gm⁻²Ω⁻¹, and more optionally 0.6 gm⁻²Ω⁻¹≤ρ/R≤0.8 gm⁻²Ω⁻¹, wherein ρ represents surface density of the coating on the substrate, and R represents resistance of the separator at 25°C.

21. A secondary battery, comprising a positive electrode plate, a negative electrode plate, a separator sandwiched between the positive electrode plate and the negative electrode plate, and an electrolyte, wherein the separator is the separator according to any one of claims 1 to 19 or the separator prepared in the method according to claim 20.

22. The secondary battery according to claim 21, wherein
an adhesion force between the positive electrode plate and separator of the secondary battery satisfies 1.2≤F2/F1≤4, optionally 1.5≤F2/F1≤3.8, wherein F1 represents an adhesion force between the positive electrode plate and the separator at 25°C under 2 MPa or above, and F2 represents an adhesion force between the positive electrode plate and the separator at 95°C under 2 MPa or above.

23. A battery module, comprising the secondary battery according to claim 21 or 22.

24. A battery pack, comprising at least one of the secondary battery according to claim 21 or 22 or the battery module according to claim 23.

25. An electric apparatus, comprising at least one of the secondary battery according to claim 21 or 22, the battery module according to claim 23, or the battery pack according to claim 24.
